# EUROPÄISCHE PATENTSCHRIFT

(11) **EP 3 538 633 B1**
(45) Veröffentlichungstag und Bekanntmachung des Hinweises auf die Patenterteilung: **23.04.2025**
(21) Anmeldenummer: 17794265.3
(22) Anmeldetag: 20.10.2017
(51) Int. Cl.: C11D 3/386

(54) **AMYLASE FÜR WASCH- UND REINIGUNGSMITTELANWENDUNGEN**
AMYLASE FOR LAUNDRY AND CLEANING USE
AMYLASE POUR USAGE DE NETTOYAGE

(30) Priorität: 08.11.2016 DE 102016221851
(43) Veröffentlichungstag der Anmeldung: 18.09.2019
(73) Patentinhaber: Henkel AG & Co. KGaA, 40589 Düsseldorf (DE)
(72) Erfinder: HERBST, Daniela, 40237 Düsseldorf (DE); WIELAND, Susanne, 41541 Zons/Dormagen (DE); O'CONNELL, Timothy, 86899 Landsberg am Lech (DE); MUßMANN, Nina, 47877 Willich (DE); LAUFS, Brian, 41363 Jüchen (DE); SCHMELING, Marianne, 41352 Korschenbroich (DE); BUISKER, Detlef, 45134 Essen (DE); WEBER, Thomas, 35096 Weimar (Lahn) (DE)
(86) Internationale Anmeldenummer: PCT/EP2017/076858
(87) Internationale Veröffentlichungsnummer: WO 2018/086847

(56) Entgegenhaltungen:
- WO-A1-2014/183921
- WO-A1-2015/150457
- WO-A1-2015/189372
- WO-A1-2016/180748
- WO-A2-00/60058
- DE-A1- 102005 062 984

## Beschreibung

Die Erfindung liegt auf dem Gebiet der Enzymtechnologie. Die Erfindung betrifft Mittel, bevorzugt Wasch- oder Reinigungsmittel, besonders bevorzugt Flüssigwasch- oder Flüssigreinigungsmittel, die eine Amylase enthalten, die eine verbesserte Lagerstabilität besitzt. Die Erfindung betrifft ferner Verfahren zur Reinigung von Textilien und harten Oberflächen und Verwendungen dieser Wasch- oder Reinigungsmittel.

Amylasen gehören zu den technisch bedeutenden Enzymen. Ihr Einsatz für Wasch- und Reinigungsmittel ist industriell etabliert und sie können in modernen, leistungsfähigen Wasch- und Reinigungsmitteln enthalten sein. Amylasen werden unterteilt in α-, β-, γ- und Isoamylasen. Amylasen werden als Hydrolase (ein Enzym, das hydrolytisch spaltet) oder auch als Glykosidase (ein Enzym, das Polysaccharide spaltet) eingestuft. α-Amylasen (EC 3.2.1.1) spalten innere α(1-4)-Glykosidbindungen der Amylose, nicht jedoch terminale oder α(1-6)-Glykosidbindungen. Dadurch entstehen Maltose, Maltotriose und verzweigte Oligosaccharide. β-Amylasen (EC 3.2.1.2) spalten in Sacchariden vom Kettenende her jeweils ein Maltosemolekül ab. γ-Amylasen (EC 3.2.1.3) spalten in Sacchariden vom Kettenende her jeweils ein β-D-Glucose Molekül ab. Isoamylasen (EC 3.2.1.68) kommen nur in Pflanzen und Bakterien vor und spalten die 1,6-glykosidischen Verzweigungen von Glycogen und Amylopectin. Die in den aus dem Stand der Technik bekannten Wasch- oder Reinigungsmitteln eingesetzten Amylasen sind üblicherweise mikrobiellen Ursprungs und stammen in der Regel aus Bakterien oder Pilzen, beispielsweise der Gattungen *Bacillus, Pseudomonas, Acinetobacter, Micrococcus, Humicola, Trichoderma* oder *Trichosporon,* insbesondere *Bacillus.* Amylasen werden üblicherweise nach an sich bekannten biotechnologischen Verfahren durch geeignete Mikroorganismen produziert, beispielsweise durch transgene Expressionswirte der Gattungen *Bacillus* oder durch filamentöse Pilze.

Eine besonders ausgiebig charakterisierte alpha-Amylase ist ein aus dem alkalophilen *Bacillus sp. Stamm TS-23* gewonnenes Enzym, das mindestens fünf Arten von Stärke hydrolysiert (Lin et al., Biotechnol Appl Biochem, 28: 61-68, 1998). Die alpha-Amylase aus *Bacillus sp. Stamm TS-* 23 besitzt ein pH-Optimum von 9, obwohl sie über einen breiten pH -Bereich stabil ist (dh. pH 4,7 bis 10,8). Ihre optimale Temperatur beträgt 45°C, wobei das Enzym auch Aktivität bei niedrigeren Temperaturen, beispielsweise 15-20°C aufweist.

Auch die amerikanischen Patentanmeldungen US 7407677 B2 und US 8852912 B2 offenbaren spezifische alpha-Amylasen und deren Fragmente zur Verwendung in Wasch- u. Reinigungsmitteln. Aus DE 102005062984 A1, WO 2014/183921, WO 2015/189372, WO 2015/150457, WO 2000/060058 und WO 2016/180748 sind amylasehaltige Wasch- und Reinigungsmittel bekannt.

Generell sind nur ausgewählte Amylasen für den Einsatz in Tensid-haltigen Zubereitungen überhaupt geeignet. Viele Amylasen zeigen in derartigen Zubereitungen keine ausreichende katalytische Leistung oder Stabilität. Insbesondere bei der Verwendung in Waschmitteln, die normalerweise in einer Menge vom Verbraucher bezogen werden, so dass bis zum endgültigen Verbrauch des Waschmittels mehrere Wochen oder Monate vergehen können (d.h. die Waschmittel müssen vom Verbraucher über Wochen oder Monate gelagert werden) zeigen viele Amylasen eine Instabilität, die wiederum zu einer unzureichenden katalytischen Aktivität während des Waschvorgangs führt.

Folglich haben Amylase-haltige Formulierungen aus dem Stand der Technik den Nachteil, dass sie oftmals nach Lagerung der Formulierung keine zufriedenstellende hydrolytische Aktivität aufweisen und daher keine optimale Reinigungsleistung an Amylase-sensitiven Anschmutzungen zeigen.

Überraschenderweise wurde jetzt festgestellt, dass eine Amylase gemäß SEQ ID NO:1 oder eine hierzu hinreichend ähnliche Amylase hinsichtlich der (Lager-)Stabilität gegenüber einer Referenzamylase verbessert ist und daher besonders für den Einsatz in Wasch- oder Reinigungsmitteln geeignet ist.

Daher richtet sich in einem ersten Aspekt die vorliegende Erfindung auf ein Mittel, bevorzugt Wasch- oder Reinigungsmittel, besonders bevorzugt Flüssigwasch- oder Flüssigreinigungsmittel, dadurch gekennzeichnet, dass es mindestens eine Amylase enthält, die eine Aminosäuresequenz umfasst, die über ihre Gesamtlänge mindestens 98% Sequenzidentität mit der in SEQ ID NO:1 angegebenen Aminosäuresequenz aufweist, wobei das Mittel bezogen auf das Gesamtgewicht 0,0001 bis 1 Gew.-%, vorzugsweise 0,006 bis 0,6 Gew.-% der Amylase enthält und wobei folgende Mittel ausgenommen sind, wenn sie die Amylase in einer Konzentration von 0,2 mg/l Aktivproteingehalt oder 0,05 mg/l Aktivproteingehalt enthalten:

| Compound | Content of compound (% w/w) | % active component (% w/w) |
|---|---|---|
| LAS (linear alkylbenzene sulfonates) | 5,15 | 5,00 |
| AS (alkylbenzene sulfonates) | 5,00 | 4,50 |
| AEOS (alkyl ethoxy sulfate) | 14,18 | 10,00 |
| Coco fatty acid | 1,00 | 1,00 |
| AEO (alkyl ethoxylate) | 5,00 | 5,00 |
| MEA (monoethanolamine) | 0,30 | 0,30 |
| MPG (monopropylene glycol) | 3,00 | 3,00 |
| Ethanol | 1,50 | 1,35 |
| DTPA (as Na5 salt) pentasodium diethylenetriaminepentaacetic acid | 0,25 | 0,10 |
| Sodium citrate | 4,00 | 4,00 |
| Sodium formate | 1,00 | 1,00 |
| Sodium hydroxide | 0,66 | 0,66 |
| H2O, ion exchanged | 58,95 | 58,95 |

und

| Compound | Content of compound (% w/w) | % active component (% w/w) |
|---|---|---|
| LAS (linear alkylbenzene sulfonates) | 12,00 | 11,60 |
| AEOS (alkyl ethoxy sulfate), SLES (sodium lauryl ether sulfate) | 17,63 | 4,90 |
| Soy fatty acid | 2,75 | 2,48 |
| Coco fatty acid | 2,75 | 2,80 |
| Sodium hydroxide | 1,75 | 1,80 |
| Ethanol / Propan-2-ol | 3,00 | 2,70/0,30 |
| MPG (monopropylene glycol) | 6,00 | 6,00 |
| Glycerol | 1,71 | 1,70 |
| TEA (triethanolamine) | 3,33 | 3,30 |
| Sodium formate | 1,00 | 1,00 |
| Sodium citrate | 2,00 | 2,00 |
| DTMPA (diethylenetriaminepentaacetic acid) | 0,48 | 0,20 |
| PCA (polycarboxylic acid type polymer) | 0,46 | 0,18 |
| Phenoxy ethanol | 0,50 | 0,50 |
| H2O, ion exchanged | 33,64 | 33,64 |

In einem weiteren Aspekt richtet sich die vorliegende Erfindung auf die Verwendung des erfindungsgemäßen Mittels zur Entfernung von Stärke-haltigen Anschmutzungen.

In noch einem Aspekt richtet sich die vorliegende Erfindung ferner auf ein Waschverfahren umfassend die Verfahrensschritte a) Bereitstellen einer Wasch- oder Reinigungslösung umfassend ein erfindungsgemäßes Mittel, und b) In-Kontakt-Bringen eines Textils oder einer harten Oberfläche mit der Wasch- oder Reinigungslösung gemäß (a).

Im Sinne der Erfindung gilt für die Definition eines Zahlenbereichs, welcher "zwischen" zwei Bereichsgrenzen liegen soll, dem allgemeinen Sprachgebrauch folgend, dass die die Bereichsgrenzen nicht mit eingeschlossen sind. Zahlenbereiche, die von einer Bereichsgrenze bis zu einer anderen Bereichsgrenze definiert sind, schließen die Bereichsgrenzen mit ein.

"Mindestens ein", wie hierin verwendet, schließt ein, ist aber nicht begrenzt auf, 1, 2, 3, 4, 5, 6 und mehr.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung/Zusammensetzung.

Im Rahmen der vorliegenden Erfindung stehen Fettsäuren bzw. Fettalkohole bzw. deren Derivate - soweit nicht anders angegeben - stellvertretend für verzweigte oder unverzweigte Carbonsäuren bzw. Alkohole bzw. deren Derivate mit vorzugsweise 6 bis 22 Kohlenstoffatomen. Insbesondere sind auch die beispielsweise nach der *Roelenschen* Oxo-Synthese erhältlichen Oxo-Alkohole bzw. deren Derivate entsprechend einsetzbar. Wann immer im Folgenden Erdalkalimetalle als Gegenionen für einwertige Anionen genannt sind, so bedeutet das, dass das Erdalkalimetall natürlich nur in der halben - zum Ladungsausgleich ausreichenden - Stoffmenge wie das Anion vorliegt.

Die hierin beschriebenen Mittel sind Wasch- oder Reinigungsmittel, besonders bevorzugt Flüssigwasch- oder Flüssigreinigungsmittel. Unter einem Reinigungsmittel sind erfindungsgemäß alle Mittel zu verstehen, die sich zum Reinigen von festen Oberflächen eignen, wie zum Beispiel Geschirrspülmittel, insbesondere Handgeschirrspülmittel. Unter Waschmittel sind erfindungsgemäß alle Mittel zu verstehen, die sich zum Reinigen oder Behandeln von Textilien eignen, einschließlich von Spezialwaschmitteln und Waschhilfsmitteln. Weitere geeignete Inhaltsstoffe derartiger Mittel werden weiter unten im Detail beschrieben.

"Flüssig", wie hierin in Bezug auf die beschriebenen Mittel verwendet, schließt alle bei Raumtemperatur fließfähigen Zusammensetzungen ein und erfasst beispielsweise auch Gele.

Die vorliegende Erfindung basiert auf der überraschenden Erkenntnis der Erfinder, dass eine Amylase gemäß SEQ ID NO:1 oder eine hierzu hinreichend ähnliche Amylase eine verbesserte (Lager-)Stabilität zeigt. Das ist insbesondere insoweit überraschend, die oben genannte Amylase zuvor nicht mit einer erhöhten Stabilität in Tensidzusammensetzungen in Verbindung gebracht wurde.

Die erfindungsrelevanten Amylasen verfügen über eine erhöhte Stabilität in Wasch- oder Reinigungsmitteln, insbesondere bei einer Lagerung von 2 oder mehr Tagen, 4 oder mehr Tagen, 10 oder mehr Tagen, 2 oder mehr Wochen, 4 oder mehr Wochen oder 8 oder mehr Wochen. Solche Mittel mit leistungsverbesserten Amylasen ermöglichen verbesserte Waschergebnisse an Stärke-sensitiven Anschmutzungen in einem weiten Temperaturbereich.

Die erfindungsrelevanten Amylasen weisen enzymatische Aktivität auf, das heißt, sie sind zur Hydrolyse von Stärke befähigt, insbesondere in einem Wasch- oder Reinigungsmittel. Eine erfindungsrelevante Amylase ist daher ein Enzym, welches die Hydrolyse von glycosidischen Bindungen in Stärke-Substraten katalysiert und dadurch in der Lage ist, Stärke zu spalten. Ferner handelt es sich bei einer erfindungsrelevanten Amylase vorzugsweise um eine reife (mature) Amylase, d.h. um das katalytisch aktive Molekül ohne Signal- und/oder Propeptid(e). Soweit nicht anders angegeben beziehen sich auch die angegebenen Sequenzen auf jeweils reife (prozessierte) Enzyme.

In verschiedenen Ausführungsformen ist das Mittel, bevorzugt Wasch- oder Reinigungsmittel, besonders bevorzugt Flüssigwasch- oder Flüssigreinigungsmittel, dadurch gekennzeichnet, dass (a) die Amylase aus einer erfindungsgemäßen Amylase als Ausgangsmolekül durch ein- oder mehrfache konservative Aminosäuresubstitution erhältlich ist; und/oder (b) die Amylase aus einer erfindungsgemäßen Amylase als Ausgangsmolekül erhältlich ist durch Fragmentierung, Deletions-, Insertions- oder Substitutionsmutagenese und eine Aminosäuresequenz umfasst, die über eine Länge von mindestens 370, 380, 390, 400, 410, 420, 430, 440, 450, 460, 470, 480 oder 482 zusammenhängenden Aminosäuren mit dem Ausgangsmolekül übereinstimmt.

In einer weiteren Ausführungsform der Erfindung umfasst die Amylase eine Aminosäuresequenz, die zu der in SEQ ID NO:1 angegebenen Aminosäuresequenz über deren Gesamtlänge zu mindestens 98,5%, 98,8%, 99%, 99,5% oder 100% identisch ist.

In weiteren Ausführungsformen der Erfindung enthält das erfindungsgemäße Mittel nicht die folgende Zusammensetzung: a) eine Gesamtmenge von 2,0 bis 8,0 Gew.-% C₉-C₂₀-Alkylbenzolsulfonat, und b) eine Gesamtmenge von 10,0 bis 18,0 Gew.-% R¹-O-(CH₂CH₂O)ₙ-SO₃M, worin R¹ für eine C₁₂₋₁₈-Alkylgruppe steht, n für eine Zahl von 2 bis 3 steht und M für ein einwertiges Kation steht, und c) eine Gesamtmenge von 1,0 bis 6,0 Gew.-% R²-O-(CH₂CH₂O)ₘ-SO₃M', worin R² für eine C₁₂₋₁₈-Alkylgruppe steht, m für eine Zahl von 7 bis 8 steht und M' für ein einwertiges Kation steht, und d) eine Gesamtmenge von 2,0 bis 10,0 Gew.-%, vorzugsweise 2,5 bis 7,5 Gew.-%, weiter bevorzugt 4,0 bis 6,0 Gew.-% Fettalkoholethoxylat(e), und e) Wasser und f) mindestens eine Amylase, wobei die Amylase eine Aminosäuresequenz umfasst, die mindestens 70% Sequenzidentität mit der in SEQ ID NO:1 angegebenen Aminosäuresequenz über deren Gesamtlänge aufweist, wobei sich die Gew-% Angaben auf das Gesamtgewicht der Zusammensetzung beziehen.

Die erfindungsgemäße Zusammensetzung enthält zwingend mindestens eine Amylase. Diese Amylase ist eine α-Amylase und umfasst eine Aminosäuresequenz, die mindestens 98% Sequenzidentität mit der in SEQ ID NO:1 angegebenen Aminosäuresequenz über deren Gesamtlänge aufweist. α-Amylasen (E.C. 3.2.1.1) hydrolysieren als Enzym interne α-1,4-glycosidische Bindungen von Stärke und stärkeähnlichen Polymeren.

Die Menge an einer solchen Amylase beträgt typischerweise 0,01 bis 1 Gew.-% bezogen auf aktives Protein.

Bevorzugte Ausführungsformen der besagten Mittel mit besagter Amylase erzielen die vorteilhaften Reinigungsleistungen bei niedrigen Temperaturen zwischen 10°C und 60°C, zwischen 15°C und 50°C und zwischen 20°C und 40°C. Folglich werden besonders bevorzugte Ausführungsformen der besagten Mittel mit besagter Amylase bereitgestellt, deren Reinigungsleistung gezielt im Hinblick auf eine Anschmutzung oder auf mehrere Anschmutzungen ähnlichen Typs, insbesondere bei Temperaturen von höchstens 25°C, besonders bevorzugt bei Temperaturen von höchstens 20°C vorteilhaft ist.

Ferner verfügen bevorzugte Ausführungsformen der in der erfindungsgemäßen Mittel eingesetzten Amylase über eine besondere Stabilität in Wasch- oder Reinigungsmitteln, beispielsweise gegenüber Tensiden und/oder Bleichmitteln und/oder gegenüber Temperatureinflüssen, insbesondere gegenüber hohen Temperaturen, beispielsweise zwischen 50 und 65°C, insbesondere 60°C, und/oder gegenüber sauren oder alkalischen Bedingungen und/oder gegenüber pH-Wert-Änderungen und/oder gegenüber denaturierenden oder oxidierenden Agentien und/oder gegenüber proteolytischem Abbau und/oder gegenüber einer Veränderung der Redox-Verhältnisse. Solche vorteilhaften Ausführungsformen erfindungsgemäßer Amylasen ermöglichen folglich verbesserte Waschergebnisse an Amylase-sensitiven Anschmutzungen in einem weiten Temperaturbereich.

Unter Reinigungsleistung wird im Rahmen der Erfindung die Aufhellungsleistung an einer oder mehreren Anschmutzungen, insbesondere auf Wäsche oder Geschirr, verstanden. Im Rahmen der Erfindung weist sowohl das Wasch- oder Reinigungsmittel, welches die Amyalse umfasst beziehungsweise die durch dieses Mittel gebildete Wasch- oder Reinigungsflotte, als auch die Amylase selbst eine jeweilige Reinigungsleistung auf. Die Reinigungsleistung des Enzyms trägt somit zur Reinigungsleistung des Mittels beziehungsweise der durch das Mittel gebildeten Wasch- oder Reinigungsflotte bei. Die Reinigungsleistung wird bevorzugt ermittelt wie weiter unten angegeben.

Die Bestimmung der Identität von Nukleinsäure- oder Aminosäuresequenzen erfolgt durch einen Sequenzvergleich. Dieser Sequenzvergleich basiert auf dem im Stand der Technik etablierten und üblicherweise genutzten BLAST-Algorithmus (vgl. beispielsweise Altschul, S.F., Gish, W., Miller, W., Myers, E.W. & Lipman, D.J. (1990) "Basic local alignment search tool." J. Mol. Biol. 215:403-410, und Altschul, Stephan F., Thomas L. Madden, Alejandro A. Schaffer, Jinghui Zhang, Hheng Zhang, Webb Miller, and David J. Lipman (1997): "Gapped BLAST and PSI-BLAST: a new generation of protein database search programs"; Nucleic Acids Res., 25, S.3389-3402) und geschieht prinzipiell dadurch, dass ähnliche Abfolgen von Nukleotiden oder Aminosäuren in den Nukleinsäure- oder Aminosäuresequenzen einander zugeordnet werden. Eine tabellarische Zuordnung der betreffenden Positionen wird als Alignment bezeichnet. Ein weiterer im Stand der Technik verfügbarer Algorithmus ist der FASTA-Algorithmus. Sequenzvergleiche (Alignments), insbesondere multiple Sequenzvergleiche, werden mit Computerprogrammen erstellt. Häufig genutzt werden beispielsweise die Clustal-Serie (vgl. beispielsweise Chenna et al. (2003): Multiple sequence alignment with the Clustal series of programs. Nucleic Acid Research 31, 3497-3500), T-Coffee (vgl. beispielsweise Notredame et al. (2000): T-Coffee: A novel method for multiple sequence alignments. J. Mol. Biol. 302, 205-217) oder Programme, die auf diesen Programmen beziehungsweise Algorithmen basieren. In der vorliegenden Patentanmeldung wurden alle Sequenzvergleiche (Alignments) mit dem Computer-Programm Vector NTI^{®} Suite 10.3 (Invitrogen Corporation, 1600 Faraday Avenue, Carlsbad, Kalifornien, USA) mit den vorgegebenen Standardparametern erstellt, dessen AlignX-Modul für die Sequenzvergleiche auf ClustalW basiert.

Solch ein Vergleich erlaubt auch eine Aussage über die Ähnlichkeit der verglichenen Sequenzen zueinander. Sie wird üblicherweise in Prozent Identität, das heißt dem Anteil der identischen Nukleotide oder Aminosäurereste an denselben oder in einem Alignment einander entsprechenden Positionen angegeben. Der weiter gefasste Begriff der Homologie bezieht bei Aminosäuresequenzen konservierte Aminosäure-Austausche in die Betrachtung mit ein, also Aminosäuren mit ähnlicher chemischer Aktivität, da diese innerhalb des Proteins meist ähnliche chemische Aktivitäten ausüben. Daher kann die Ähnlichkeit der verglichenen Sequenzen auch Prozent Homologie oder Prozent Ähnlichkeit angegeben sein. Identitäts- und/oder Homologieangaben können über ganze Polypeptide oder Gene oder nur über einzelne Bereiche getroffen werden. Homologe oder identische Bereiche von verschiedenen Nukleinsäure- oder Aminosäuresequenzen sind daher durch Übereinstimmungen in den Sequenzen definiert. Solche Bereiche weisen oftmals identische Funktionen auf. Sie können klein sein und nur wenige Nukleotide oder Aminosäuren umfassen. Oftmals üben solche kleinen Bereiche für die Gesamtaktivität des Proteins essentielle Funktionen aus. Es kann daher sinnvoll sein, Sequenzübereinstimmungen nur auf einzelne, gegebenenfalls kleine Bereiche zu beziehen. Soweit nicht anders angegeben beziehen sich Identitäts- oder Homologieangaben in der vorliegenden Anmeldung aber auf die Gesamtlänge der jeweils angegebenen Nukleinsäure- oder Aminosäuresäuresequenz.

In einer ganz besonders bevorzugten Ausführungsform der Erfindung ist die Amylase dadurch gekennzeichnet, dass ihre Reinigungsleistung mindestens derjenigen einer Amylase entspricht, die eine Aminosäuresequenz umfasst, die der in SEQ ID NO:1 angegebenen Aminosäuresequenz entspricht, wobei die Reinigungsleistung in einem Waschsystem bestimmt wird, das ein Waschmittel in einer Dosierung zwischen 4,5 und 7,0 Gramm pro Liter Waschflotte sowie die Amylase enthält, wobei die zu vergleichenden Amylasen konzentrationsgleich (bezogen auf aktives Protein) eingesetzt sind und die Reinigungsleistung bestimmt wird durch Messung des Weißheitsgrades der gewaschenen Textilien, der Waschvorgang für 70 Minuten bei einer Temperatur von 40°C erfolgt und das Wasser eine Wasserhärte zwischen 15,5 und 16,5° (deutsche Härte) aufweist. Die Konzentration der Amylase in dem für dieses Waschsystem bestimmten Waschmittel beträgt von 0,001-0,1 Gew.-%, vorzugsweise von 0,01 bis 0,06 Gew.-%, bezogen auf aktives Protein.

Zusätzlich zu den vorstehend erläuterten Aminosäureveränderungen können erfindungsgemäße Amylasen weitere Aminosäureveränderungen, insbesondere Aminosäure-Substitutionen, -Insertionen oder -Deletionen, aufweisen. Solche Amylasen sind beispielsweise durch gezielte genetische Veränderung, d.h. durch Mutageneseverfahren, weiterentwickelt und für bestimmte Einsatzzwecke oder hinsichtlich spezieller Eigenschaften (beispielsweise hinsichtlich ihrer katalytischen Aktivität, Stabilität, usw.) optimiert. Ferner können erfindungsgemäße Nukleinsäuren in Rekombinationsansätze eingebracht und damit zur Erzeugung völlig neuartiger Amylasen oder anderer Polypeptide genutzt werden.

Das Ziel ist es, in die bekannten Moleküle gezielte Mutationen wie Substitutionen, Insertionen oder Deletionen einzuführen, um beispielsweise die Reinigungsleistung von erfindungsgemäßen Enzymen zu verbessern. Hierzu können insbesondere die Oberflächenladungen und/oder der isoelektrische Punkt der Moleküle und dadurch ihre Wechselwirkungen mit dem Substrat verändert werden. So kann beispielsweise die Nettoladung der Enzyme verändert werden, um darüber die Substratbindung insbesondere für den Einsatz in Wasch- und Reinigungsmitteln zu beeinflussen. Alternativ oder ergänzend kann durch eine oder mehrere entsprechende Mutationen die Stabilität der Amylase erhöht und dadurch ihre Reinigungsleistung verbessert werden. Vorteilhafte Eigenschaften einzelner Mutationen, z.B. einzelner Substitutionen, können sich ergänzen. Eine hinsichtlich bestimmter Eigenschaften bereits optimierte Amylase, zum Beispiel hinsichtlich ihrer Stabilität gegenüber Tensiden und/oder Bleichmitteln und/oder anderen Komponenten, kann daher im Rahmen der Erfindung zusätzlich weiterentwickelt sein.

Für die Beschreibung von Substitutionen, die genau eine Aminosäureposition betreffen (Aminosäureaustausche), wird folgende Konvention angewendet: zunächst wird die natürlicherweise vorhandene Aminosäure in Form des international gebräuchlichen Einbuchstaben-Codes bezeichnet, dann folgt die zugehörige Sequenzposition und schließlich die eingefügte Aminosäure. Mehrere Austausche innerhalb derselben Polypeptidkette werden durch Schrägstriche voneinander getrennt. Bei Insertionen sind nach der Sequenzposition zusätzliche Aminosäuren benannt. Bei Deletionen ist die fehlende Aminosäure durch ein Symbol, beispielsweise einen Stern oder einen Strich, ersetzt. Beispielsweise beschreibt A95G die Substitution von Alanin an Position 95 durch Glycin, A95AG die Insertion von Glycin nach der Aminosäure Alanin an Position 95 und A95* die Deletion von Alanin an Position 95. Diese Nomenklatur ist dem Fachmann auf dem Gebiet der Enzymtechnologie bekannt.

Ein weiterer Gegenstand der vorliegenden Erfindung ist daher ein Wasch und-Reinigungsmittel enthaltend eine α-Amylase, wobei die α-Amylase dadurch gekennzeichnet ist, dass sie aus einer erfindungsgemäßen Amylase als Ausgangsmolekül durch ein- oder mehrfache konservative Aminosäuresubstitution erhältlich ist. Der Begriff "konservative Aminosäuresubstitution" bedeutet den Austausch (Substitution) eines Aminosäurerestes gegen einen anderen Aminosäurerest, wobei dieser Austausch nicht zu einer Änderung der Polarität oder Ladung an der Position der ausgetauschten Aminosäure führt, z. B. der Austausch eines unpolaren Aminosäurerestes gegen einen anderen unpolaren Aminosäurerest. Konservative Aminosäuresubstitutionen im Rahmen der Erfindung umfassen beispielsweise: G=A=S, I=V=L=M, D=E, N=Q, K=R, Y=F, S=T, G=A=I=V=L=M=Y=F=W=P=S=T.

Ein weiterer Gegenstand der vorliegenden Erfindung ist daher ein Wasch und-Reinigungsmittel enthaltend eine α-Amylase, wobei die α-Amylase dadurch gekennzeichnet ist, dass sie aus einer erfindungsgemäßen Amylase als Ausgangsmolekül erhältlich ist durch Fragmentierung, Deletions-, Insertions- oder Substitutionsmutagenese und eine Aminosäuresequenz umfasst, die über eine Länge von mindestens 370, 380, 390, 400, 410, 420, 430, 440, 450, 460, 470, 475, 476, 477, 478, 479, 480, 481 oder 482 zusammenhängenden Aminosäuren mit dem Ausgangsmolekül übereinstimmt.

So ist es beispielsweise möglich, an den Termini oder in den Loops des Enzyms einzelne Aminosäuren zu deletieren, ohne daß dadurch die enzymatische Aktivität verloren oder vermindert wird. Ferner kann durch derartige Fragmentierung, Deletions-, Insertions- oder Substitutionsmutagenese beispielsweise auch die Allergenizität betreffender Enzyme gesenkt und somit insgesamt ihre Einsetzbarkeit verbessert werden. Vorteilhafterweise behalten die Enzyme auch nach der Mutagenese ihre enzymatische Aktivität, d.h. ihre enzymatische Aktivität entspricht mindestens derjenigen des Ausgangsenzyms. Auch Substitutionen können vorteilhafte Wirkungen zeigen. Sowohl einzelne wie auch mehrere zusammenhängende Aminosäuren können gegen andere Aminosäuren ausgetauscht werden.

Ein erfindungsgemäßes Enzym kann zusätzlich stabilisiert sein, insbesondere durch eine oder mehrere Mutationen, beispielsweise Substitutionen, oder durch Kopplung an ein Polymer. Denn eine Erhöhung der Stabilität bei der Lagerung und/oder während des Einsatzes, beispielsweise beim Waschprozess, führt dazu, dass die enzymatische Aktivität länger anhält und damit die Reinigungsleistung verbessert wird. Grundsätzlich kommen alle im Stand der Technik beschriebenen und/oder zweckmäßigen Stabilisierungsmöglichkeiten in Betracht. Bevorzugt sind solche Stabilisierungen, die über Mutationen des Enzyms selbst erreicht werden, da solche Stabilisierungen im Anschluss an die Gewinnung des Enzyms keine weiteren Arbeitsschritte erfordern. Hierfür geeignete Sequenzveränderungen sind aus dem Stand der Technik bekannt.

Weitere Möglichkeiten der Stabilisierung sind z. B.:
- Veränderung der Bindung von Metallionen, insbesondere der Calcium-Bindungsstellen, beispielsweise durch Austauschen von einer oder mehreren der an der Calcium-Bindung beteiligten Aminosäure(n) gegen eine oder mehrere negativ geladene Aminosäuren und/oder durch Einführen von Sequenzveränderungen in mindestens einer der Folgen der beiden Aminosäuren Arginin/Glycin;
- Schutz gegen den Einfluss von denaturierenden Agentien wie Tensiden durch Mutationen, die eine Veränderung der Aminosäuresequenz auf oder an der Oberfläche des Proteins bewirken;
- Austausch von Aminosäuren, die nahe dem N-Terminus liegen, gegen solche, die vermutlich über nicht-kovalente Wechselwirkungen mit dem Rest des Moleküls in Kontakt treten und somit einen Beitrag zur Aufrechterhaltung der globulären Struktur leisten.

Bevorzugte Ausführungsformen sind solche, bei denen das Enzym auf mehrere Arten stabilisiert wird, da mehrere stabilisierende Mutationen additiv oder synergistisch wirken.

Ein weiterer Gegenstand der Erfindung ist ein Mittel wie vorstehend beschrieben, welches dadurch gekennzeichnet ist, dass die Amylase mindestens eine chemische Modifikation aufweist. Ein Enzym mit einer solchen Veränderung wird als Derivat bezeichnet, d.h. das Enzym ist derivatisiert.

Unter Derivaten werden im Sinne der vorliegenden Anmeldung demnach solche Proteine verstanden, deren reine Aminosäurekette chemisch modifiziert worden ist. Solche Derivatisierungen können beispielsweise in vivo durch die Wirtszelle erfolgen, die das Protein exprimiert. Diesbezüglich sind Kopplungen niedrigmolekularer Verbindungen wie von Lipiden oder Oligosacchariden besonders hervorzuheben. Derivatisierungen können aber auch in vitro durchgeführt werden, etwa durch die chemische Umwandlung einer Seitenkette einer Aminosäure oder durch kovalente Bindung einer anderen Verbindung an das Protein. Beispielsweise ist die Kopplung von Aminen an Carboxylgruppen eines Enzyms zur Veränderung des isoelektrischen Punkts möglich. Eine solche andere Verbindung kann auch ein weiteres Protein sein, das beispielsweise über bifunktionelle chemische Verbindungen an ein erfindungsgemäßes Protein gebunden wird. Ebenso ist unter Derivatisierung die kovalente Bindung an einen makromolekularen Träger zu verstehen, oder auch ein nichtkovalenter Einschluss in geeignete makromolekulare Käfigstrukturen. Derivatisierungen können beispielsweise die Substratspezifität oder die Bindungsstärke an das Substrat beeinflussen oder eine vorübergehende Blockierung der enzymatischen Aktivität herbeiführen, wenn es sich bei der angekoppelten Substanz um einen Inhibitor handelt. Dies kann beispielsweise für den Zeitraum der Lagerung sinnvoll sein. Derartige Modifikationen können ferner die Stabilität oder die enzymatische Aktivität beeinflussen. Sie können ferner auch dazu dienen, die Allergenizität und/oder Immunogenizität des Proteins herabzusetzen und damit beispielsweise dessen Hautverträglichkeit zu erhöhen. Beispielsweise können Kopplungen mit makromolekularen Verbindungen, beispielsweise Polyethylenglykol, das Protein hinsichtlich der Stabilität und/oder Hautverträglichkeit verbessern.

Unter Derivaten eines erfindungsgemäßen Proteins können im weitesten Sinne auch Präparationen dieser Proteine verstanden werden. Je nach Gewinnung, Aufarbeitung oder Präparation kann ein Protein mit diversen anderen Stoffen vergesellschaftet sein, beispielsweise aus der Kultur der produzierenden Mikroorganismen. Ein Protein kann auch, beispielsweise zur Erhöhung seiner Lagerstabilität, mit anderen Stoffen gezielt versetzt worden sein. Erfindungsgemäß sind deshalb auch alle Präparationen eines erfindungsgemäßen Proteins. Das ist auch unabhängig davon, ob es in einer bestimmten Präparation tatsächlich diese enzymatische Aktivität entfaltet oder nicht. Denn es kann gewünscht sein, dass es bei der Lagerung keine oder nur geringe Aktivität besitzt, und erst zum Zeitpunkt der Verwendung seine enzymatische Funktion entfaltet. Dies kann beispielsweise über entsprechende Begleitstoffe gesteuert werden.

In verschiedenen Ausführungsformen kann das erfindungsgemäße Mittel ferner mindestens einen weiteren Bestandteil ausgewählt aus der Gruppe bestehend aus Tensiden, weiteren Enzymen, Enzymstabilisatoren, Komplexbildnern für Schwermetalle, Gerüststoffen, Bleichmitteln, Buildern, Elektrolyten, nichtwässrigen Lösungsmitteln, pH-Stellmitteln, Geruchsabsorbern, desodorierenden Substanzen, Parfümen, Parfümträgern, Fluoreszenzmitteln, Farbstoffen, Hydrotropen, Schauminhibitoren, Silikonölen, Antiredepositionsmitteln, Vergrauungsinhibitoren, Einlaufverhinderern, weiteren Knitterschutzmitteln, Farbübertragungsinhibitoren, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- und Imprägniermitteln, Quell- und Schiebefestmitteln, weichmachenden Komponenten sowie UV-Absorbern enthalten.

Das erfindungsgemäße Mittel kann neben der Amylase auch eine Verbindung aus der Klasse der anionischen Tenside der Formel (I)

R-SO₃⁻ Y⁺ (I)

enthalten.

In dieser Formel (I) steht R für einen linearen oder verzweigten unsubstituierten Alkylarylrest. Y steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen Y⁺ können ausgewählt sein aus NH₄⁺, ½ Zn²⁺,½ Mg²⁺,½ Ca²⁺,½ Mn²⁺, und deren Mischungen.

"Alkylaryl", wie hierin verwendet, bezieht sich auf organische Reste, die aus einem Alkylrest und einem aromatischen Rest bestehen. Typische Beispiele für derartige Reste schließen ein, sind aber nicht beschränkt auf Alkylbenzolreste, wie Benzyl, Butylbenzolreste, Nonylbenzolreste, Decylbenzolreste, Undecylbenzolreste, Dodecylbenzolreste, Tridecylbenzolreste und ähnliche.

In verschiedenen Ausführungsformen sind derartige Tenside ausgewählt aus linearen oder verzweigten Alkylbenzolsulfonaten der Formel A-1 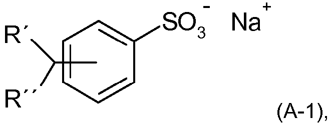 in der R' und R" zusammen 9 bis 19, vorzugsweise 11 bis 15 und insbesondere 11 bis 13 C-Atome enthalten, dargestellt. Ein ganz besonders bevorzugter Vertreter lässt sich durch die Formel A-1a beschreiben:

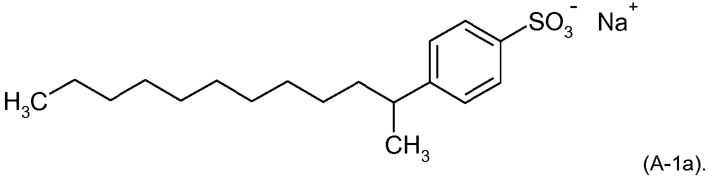

In verschiedenen Ausführungsformen handelt es sich bei der Verbindung der Formel (I) vorzugsweise um das Natriumsalz eines linearen Alkylbenzolsulfonats.

In erfindungsgemäßen Mitteln kann die mindestens eine Verbindung aus der Klasse der anionischen Tenside der Formel (I) in einer Menge von 0,001 bis 30 Gew.-%, vorzugsweise 1 - 30 Gew.-%, ferner bevorzugt 2 - 25 Gew.-%, noch bevorzugter 3 - 20 Gew.-%, in dem Wasch- oder Reinigungsmittel enthalten sein, jeweils bezogen auf das Gesamtgewicht des Wasch- oder Reinigungsmittels.

In verschiedenen Ausführungsformen kann das Mittel neben der mindestens einen Verbindung der Formel (I) oder alternativ dazu mindestens ein anderes Tensid enthalten. Als alternative oder zusätzliche Tenside kommen insbesondere weitere anionische Tenside, nichtionische Tenside und deren Gemische, aber auch kationische, zwitterionische und amphotere Tenside in Frage.

In verschiedenen Ausführungsformen enthalten die erfindungsgemäßen Mittel vorzugsweise mindestens ein anionisches Tensid aus der Gruppe der Alkylethersulfate.

Alkylethersulfate (Fettalkoholethersulfate, INCI Alkyl Ether Sulfates) sind Produkte von Sulfatierreaktionen an alkoxylierten Alkoholen. Dabei versteht der Fachmann allgemein unter alkoxylierten Alkoholen die Reaktionsprodukte von Alkylenoxid, bevorzugt Ethylenoxid, mit Alkoholen, im Sinne der vorliegenden Erfindung bevorzugt mit längerkettigen Alkoholen, d.h. mit aliphatischen geradkettigen oder ein oder mehrfach verzweigten, acyclischen oder cyclischen, gesättigten oder ein oder mehrfach ungesättigten, vorzugsweise geradkettigen, acyclischen, gesättigten, Alkoholen mit 6 bis 22, vorzugsweise 8 bis 18, insbesondere 10 bis 16 und besonders bevorzugt 12 bis 14 Kohlenstoffatomen. In der Regel entsteht aus n Molen Ethylenoxid und einem Mol Alkohol, abhängig von den Reaktionsbedingungen, ein komplexes Gemisch von Additionsprodukten unterschiedlicher Ethoxylierungsgrade (n = 1 bis 30, vorzugsweise 1 bis 20, insbesondere 1 bis 10, besonders bevorzugt 2 bis 4). Eine weitere Ausführungsform der Alkoxylierung besteht im Einsatz von Gemischen der Alkylenoxide, bevorzugt des Gemisches von Ethylenoxid und Propylenoxid.

In verschiedenen Ausführungsformen ist das Alkylethersulfat insbesondere ein anionisches Tensid der Formel

R¹-O-(AO)ₙ-SO₃⁻ X⁺ (II).

In dieser Formel (II) steht R¹ für einen linearen oder verzweigten, substituierten oder unsubstituierten Alkylrest, , vorzugsweise für einen linearen, unsubstituierten Alkylrest, besonders bevorzugt für einen Fettalkoholrest. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht für eine Ethylenoxid- (EO) oder Propylenoxid- (PO) Gruppierung, vorzugsweise für eine Ethylenoxidgruppierung. Der Index n steht für eine ganze Zahl von 1 bis 50, vorzugsweise von 1 bis 20 und insbesondere von 1 bis 10. Ganz besonders bevorzugt steht n für die Zahlen 1, 2, 3, 4, 5, 6, 7 oder 8. X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X+ können ausgewählt sein aus NH₄⁺, ½ Zn²⁺,½ Mg²⁺,½ Ca²⁺,½ Mn²⁺, und deren Mischungen.

Besonders bevorzugt sind Fettalkoholethersulfate der Formel A-2 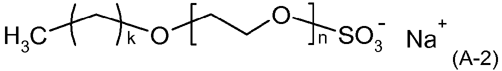 mit k = 11 bis 19, n = 1, 2, 3 oder 4. Ganz besonders bevorzugte Vertreter sind Na-C₁₂₋₁₄ Fettalkoholethersulfate mit 1 bis 2 EO (k = 11-13, n = 1 oder 2 in Formel A-2), vor allem 2 EO.

Das erfindungsgemäße Mittel, insbesondere ein Reinigungsmittel für harte Oberflächen, wie insbesondere ein manuelles Geschirrspülmittel, enthält in einer bevorzugten Ausführungsform ein oder mehrere Alkylethersulfate in einer Menge von 10 bis 40 Gew.-%, vorzugsweise 13 bis 35 Gew.-%, insbesondere 15 bis 30 Gew.-%.

Des Weiteren können als anionische Tenside auch die Alkylsulfonate (INCI Sulfonic Acids) eingesetzt werden. Diese weisen üblicherweise einen aliphatischen geradkettigen oder ein- oder mehrfach verzweigten, acyclischen oder cyclischen, gesättigten oder ein- oder mehrfach ungesättigten, vorzugsweise verzweigten, acyclischen, gesättigten, Alkylrest mit 6 bis 22, vorzugsweise 9 bis 20, insbesondere 11 bis 18 und besonders bevorzugt 14 bis 17 Kohlenstoffatomen auf.

Geeignete Alkylsulfonate sind dementsprechend die gesättigten Alkansulfonate, die ungesättigten Olefinsulfonate und die - sich formal von den auch den Alkylethersulfaten zugrunde liegenden alkoxylierten Alkoholen ableitenden - Ethersulfonate, bei denen man endständige Ethersulfonate (n-Ethersulfonate) mit an die Polyether-Kette gebundener Sulfonat-Funktion und innenständige Ethersulfonate (i-Ethersulfonate) mit mit dem Alkylrest verknüpfter Sulfonat-Funktion unterscheidet. Erfindungsgemäß bevorzugt sind die Alkansulfonate, insbesondere Alkansulfonate mit einem verzweigten, vorzugsweise sekundären, Alkylrest, beispielsweise das sekundäre Alkansulfonat sek. Na-C₁₃₋₁₇-Alkansulfonat (INCI Sodium C14-17 Alkyl Sec Sulfonate).

Das erfindungsgemäße Mittel, insbesondere ein manuelles Geschirrspülmittel, enthält ein oder mehrere sekundäre Alkylsulfonate in einer Menge von üblicherweise 1 bis 15 Gew.-%, vorzugsweise 3 bis 10 Gew.-%, insbesondere 4 bis 8 Gew.-%.

Weitere mögliche einsetzbare Aniontenside sind dem Fachmann aus dem einschlägigen Stand der Technik zu Wasch- oder Reinigungsmitteln bekannt. Hierzu zählen insbesondere aliphatische Sulfate wie Monoglyceridsulfate sowie Estersulfonate (Sulfofettsäureester), Ligninsulfonate, Fettsäurecyanamide, anionische Sulfobernsteinsäuretenside, Fettsäureisethionate, Acylaminoalkansulfonate (Fettsäuretauride), Fettsäuresarcosinate, Ethercarbonsäuren und Alkyl(ether)phosphate.

Geeignete weitere anionische Tenside sind auch anionische Gemini-Tenside mit einer Diphenyloxid-Grundstruktur, 2 Sulfonatgruppen und einem Alkylrest an einem oder beiden Benzolringen gemäß der Formel ⁻O₃S(C₆H₃R)O(C₆H₃R')SO₃⁻, in der R für einen Alkylrest mit beispielsweise 6, 10, 12 oder 16 Kohlenstoffatomen und R' für R oder H steht (Dowfax^{®} Dry Hydrotrope Powder mit C₁₆-Alkyl-rest(en); INCI Sodium Hexyldiphenyl Ether Sulfonate, Disodium Decyl Phenyl Ether Disulfonate, Disodium Lauryl Phenyl Ether Disulfonate, Disodium Cetyl Phenyl Ether Disulfonate) und fluorierte anionische Tenside, insbesondere perfluorierte Alkylsulfonate wie Ammonium-C_{9/10}-Perfluoroal-kylsulfonat (Fluorad^{®} FC 120) und Perfluoroctansulfonsäure-Kalium-Salz (Fluorad^{®} FC 95), wobei ein Gehalt an Fluorverbindungen in den erfindungsgemäßen Wasch- oder Reinigungsmitteln weniger bevorzugt ist.

Besonders bevorzugte weitere anionische Tenside sind die anionischen Sulfobernsteinsäuretenside Sulfosuccinate, Sulfosuccinamate und Sulfosuccinamide, insbesondere Sulfosuccinate und Sulfosuccinamate, äußerst bevorzugt Sulfosuccinate. Bei den Sulfosuccinaten handelt es sich um die Salze der Mono- und Diester der Sulfobernsteinsäure HOOCCH(SO₃H)CH₂COOH, während man unter den Sulfosuccinamaten die Salze der Monoamide der Sulfobernsteinsäure und unter den Sulfosuccinamiden die Salze der Diamide der Sulfobernsteinsäure versteht. Bei den Salzen handelt es sich bevorzugt um Alkalimetallsalze, Ammoniumsalze sowie Mono-, Di- bzw. Trialkanolammoniumsalze, beispielsweise Mono-, Di- bzw. Triethanolammoniumsalze, insbesondere um Lithium-, Natrium-, Kalium- oder Ammoniumsalze, besonders bevorzugt Natrium- oder Ammoniumsalze, äußerst bevorzugt Natriumsalze.

In einer besonderen Ausführungsform enthält das erfindungsgemäße Mittel als anionische Sulfobernsteinsäuretenside ein oder mehrere Sulfosuccinate, Sulfosuccinamate und/oder Sulfosuccinamide, vorzugsweise Sulfosuccinate und/oder Sulfosuccinamate, insbesondere Sulfosuccinate, in einer Menge von üblicherweise 0,001 bis 5 Gew.-%, vorzugsweise 0,01 bis 4 Gew.-%, insbesondere 0,1 bis 3 Gew.-%, besonders bevorzugt 0,2 bis 2 Gew.-%, äußerst bevorzugt 0,5 bis 1,5 Gew.-%, beispielsweise 1 Gew.-%.

Weitere einsetzbare anionische Tenside sind die Alkylsulfate der Formel

R²-O-SO₃⁻ X⁺ (III).

In dieser Formel (III) steht R² für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R² sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R² sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen. Y steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen Y+ können ausgewählt sein aus NH₄⁺, ½ Zn²⁺,½ Mg²⁺,½ Ca²⁺,½ Mn²⁺, und deren Mischungen.

In verschiedenen Ausführungsformen sind diese Tenside ausgewählt aus Fettalkoholsulfaten der Formel A-3 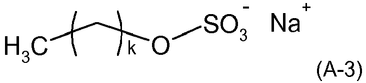 mit k = 11 bis 19. Ganz besonders bevorzugte Vertreter sind Na-C₁₂₋₁₄ Fettalkoholsulfate (k = 11-13 in Formel A-3).

Die anionischen Tenside werden üblicherweise als Alkalimetall-, Erdalkalimetall- und/oder Mono-, Di- bzw. Trialkanolammoniumsalz und/oder aber auch in Form ihrer mit dem entsprechenden Alkalimetallhydroxid, Erdalkalimetallhydroxid und/oder Mono-, Di- bzw. Trialkanolamin in situ zu neutralisierenden korrespondierenden Säure eingesetzt. Bevorzugt sind hierbei als Alkalimetalle Kalium und insbesondere Natrium, als Erdalkalimetalle Calcium und insbesondere Magnesium, sowie als Alkanolamine Mono-, Di- oder Triethanolamin. Besonders bevorzugt sind die Natriumsalze.

Zu den Amphotensiden (amphoteren Tensiden, zwitterionischen Tensiden), die erfindungsgemäß eingesetzt werden können, zählen Alkylamidoalkylamine, alkylsubstituierte Aminosäuren, acylierte Aminosäuren bzw. Biotenside, von denen die Betaine im Rahmen der erfindungsgemäßen Lehre bevorzugt werden.

Geeignete Betaine, welche vor allem in manuellen Geschirrspülmitteln Einsatz finden, sind die Alkylbetaine, die Alkylamidobetaine, die Imidazoliniumbetaine, die Sulfobetaine (INCI Sultaines) sowie die Phosphobetaine und genügen vorzugsweise Formel IV,

R¹-[CO-X-(CH₂)ₙ]ₓ-N⁺(R²)(R³)-(CH₂)ₘ-[CH(OH)-CH₂]_{y}-Y⁻ (IV)

in der R¹ ein gesättigter oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest,
- X: NH, NR⁴ mit dem C₁₋₄-Alkylrest R⁴, O oder S,
- n: eine Zahl von 1 bis 10, vorzugsweise 2 bis 5, insbesondere 3,
- x: 0 oder 1, vorzugsweise 1,
- R², R³: unabhängig voneinander ein C₁₋₄-Alkylrest, ggf. hydroxysubstituiert wie z.B. ein Hydroxyethylrest, insbesondere aber ein Methylrest,
- m: eine Zahl von 1 bis 4, insbesondere 1, 2 oder 3,
- y: 0 oder 1 und
- Y: COO, SO₃, OPO(OR⁵)O oder P(O)(OR⁵)O, wobei R⁵ ein Wasserstoffatom H oder ein C₁₋₄-Alkylrest ist.

Die Alkyl- und Alkylamidobetaine, Betaine der Formel I mit einer Carboxylatgruppe (Y⁻ = COO⁻), heißen auch Carbobetaine.

Bevorzugte Betaine sind die Alkylbetaine der Formel (la), die Alkylamidobetaine der Formel (IVb), die Sulfobetaine der Formel (IVc) und die Amidosulfobetaine der Formel (IVd),

R¹-N⁺(CH₃)₂-CH₂COO⁻ (IVa)

R¹-CO-NH-(CH₂)₃-N⁺(CH₃)₂-CH₂COO⁻ (IVb)

R¹-N⁺(CH₃)₂-CH₂CH(OH)CH₂SO₃⁻ (IVc)

R¹-CO-NH-(CH₂)₃-N⁺(CH₃)₂-CH₂CH(OH)CH₂SO₃⁻ (IVd)

in denen R¹ die gleiche Bedeutung wie in Formel I hat.

Besonders bevorzugte Betaine sind die Carbobetaine, insbesondere die Carbobetaine der Formel (IVa) und (IVb), äußerst bevorzugt die Alkylamidobetaine der Formel (IVb).

Das erfindungsgemäße Mittel kann ein oder mehrere Betaine in einer Menge von üblicherweise 1 bis 15 Gew.-%, vorzugsweise 3 bis 10 Gew.-%, insbesondere 4 bis 8 Gew.-% enthalten.

Die Alkylamidoalkylamine (INCI Alkylamido Alkylamines) sind Amphotenside der Formel (V),

R⁹-CO-NR¹⁰-(CH₂)ᵢ-N(R¹¹)-(CH₂CH₂O)ⱼ-(CH₂)ₖ-[CH(OH)]ₗ-CH₂-Z-OM (V)

in der R⁹ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest,
- R¹⁰: ein Wasserstoffatom H oder ein C₁₋₄-Alkylrest, vorzugsweise H,
- i: eine Zahl von 1 bis 10, vorzugsweise 2 bis 5, insbesondere 2 oder 3,
- R¹¹: ein Wasserstoffatom H oder CH₂COOM (zu M s.u.),
- j: eine Zahl von 1 bis 4, vorzugsweise 1 oder 2, insbesondere 1,
- k: eine Zahl von 0 bis 4, vorzugsweise 0 oder 1,
- l: 0 oder 1, wobei k = 1 ist, wenn l = 1 ist,
- Z: CO, SO₂, OPO(OR¹²) oder P(O)(OR¹²), wobei R¹² ein C₁₋₄-Alkylrest oder M (s.u.) ist, und
- M: ein Wasserstoff, ein Alkalimetall, ein Erdalkalimetall oder ein protoniertes Alkanolamin, z.B.
protoniertes Mono-, Di- oder Triethanolamin, ist.

Bevorzugte Vertreter genügen den Formeln Va bis Vd,

R⁹-CO-NH-(CH₂)₂-N(R¹¹)-CH₂CH₂O-CH₂-COOM (Va)

R⁹-CO-NH-(CH₂)₂-N(R¹¹)-CH₂CH₂O-CH₂CH₂-COOM (Vb)

R⁹-CO-NH-(CH₂)₂-N(R¹¹)-CH₂CH₂O-CH₂CH(OH)CH₂-SO₃M (Vc)

R⁹-CO-NH-(CH₂)₂-N(R¹¹)-CH₂CH₂O-CH₂CH(OH)CH₂-OPO₃HM (Vd)

in denen R¹¹ und M die gleiche Bedeutung wie in Formel (V) haben.

Erfindungsgemäß bevorzugte alkylsubstituierte Aminosäuren (INCI Alkyl-Substituted Amino Acids) sind monoalkylsubstituierte Aminosäuren gemäß Formel (VI),

R¹³-NH-CH(R¹⁴)-(CH₂)ᵤ-COOM' (VI)

in der R¹³ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest,
- R¹⁴: ein Wasserstoffatom H oder ein C₁₋₄-Alkylrest, vorzugsweise H,
- u: eine Zahl von 0 bis 4, vorzugsweise 0 oder 1, insbesondere 1, und
- M': ein Wasserstoff, ein Alkalimetall, ein Erdalkalimetall oder ein protoniertes Alkanolamin, z.B.
protoniertes Mono-, Di- oder Triethanolamin, ist,
alkylsubstituierte Iminosäuren gemäß Formel (VII),

R¹⁵-N-[(CH₂)ᵥ-COOM"]₂ (VII)

in der R¹⁵ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest,
- v: eine Zahl von 1 bis 5, vorzugsweise 2 oder 3, insbesondere 2, und
- M": ein Wasserstoff, ein Alkalimetall, ein Erdalkalimetall oder ein protoniertes Alkanolamin, z.B.
protoniertes Mono-, Di- oder Triethanolamin, wobei M" in den beiden Carboxygruppen die gleiche oder zwei verschiedene Bedeutungen haben kann, z.B. Wasserstoff und Natrium oder zweimal Natrium sein kann, ist,
und mono- oder dialkylsubstituierte natürliche Aminosäuren gemäß Formel (VIII),

R¹⁶-N(R¹⁷)-CH(R¹⁶)-COOM‴ (VIII)

in der R¹⁶ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest,
- R¹⁷: ein Wasserstoffatom oder ein C₁₋₄-Alkylrest, ggf. hydroxy- oder aminsubstituiert, z.B. ein Methyl-, Ethyl-, Hydroxyethyl- oder Aminpropylrest,
- R¹⁸: den Rest einer der 20 natürlichen α-Aminosäuren H₂NCH(R¹⁸)COOH, und
- M"': ein Wasserstoff, ein Alkalimetall, ein Erdalkalimetall oder ein protoniertes Alkanolamin, z.B.
protoniertes Mono-, Di- oder Triethanolamin, ist.

Besonders bevorzugte alkylsubstituierte Aminosäuren sind die Aminopropionate gemäß Formel (Vla),

R¹³-NH-CH₂CH₂COOM' (Vla)

in der R¹³ und M' die gleiche Bedeutung wie in Formel (VI) haben.

Acylierte Aminosäuren sind Aminosäuren, insbesondere die 20 natürlichen α-Aminosäuren, die am Aminostickstoffatom den Acylrest R¹⁹CO einer gesättigten oder ungesättigen Fettsäure R¹⁹COOH tragen, wobei R¹⁹ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest ist. Die acylierten Aminosäuren können auch als Alkalimetallsalz, Erdalkalimetallsalz oder Alkanolammoniumsalz, z.B. Mono-, Di- oder Triethanolammoniumsalz, eingesetzt werden. Beispielhafte acylierte Aminosäuren sind die gemäß INCI unter Amino Acids zusammengefassten Acylderivate, z.B. Sodium Cocoyl Glutamate, Lauroyl Glutamic Acid, Capryloyl Glycine oder Myristoyl Methylalanine.

In einer besonderen Ausführungsform der Erfindung wird eine Kombination aus zwei oder mehr verschiedenen Amphotensiden, insbesondere eine binäre Amphotensidkombination eingesetzt.

Die Amphotensidkombination enthält vorzugsweise mindestens ein Betain, insbesondere mindestens ein Alkylamidobetain, besonders bevorzugt Cocoamidopropylbetain.

In einer weiteren besonderen Ausführungsform enthält das erfindungsgemäße Mittel ein oder mehrere Amphotenside in einer Menge von mehr als 8 Gew.-%. In noch einer weiteren besonderen Ausführungsform enthält das erfindungsgemäße Mittel ein oder mehrere Amphotenside in einer Menge von weniger als 2 Gew.-%.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO, 4 EO oder 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Insbesondere bevorzugt enthält das Reinigungsmittel für harte Oberflächen einen C₁₂₋₁₈-Fettalkohol mit 7 EO oder einen C₁₃₋₁₅-Oxoalkohol mit 7 EO als nichtionisches Tensid.

Der Gehalt an nichtionischen Tensiden beträgt in dem Reinigungsmittel bevorzugt 1 bis 30 Gew.-% und vorzugsweise 2 bis 25 Gew.-%, jeweils bezogen auf das gesamte Reinigungsmittel.

Diese nichtionische Tenside weisen in Kombination mit einem Aminoxid eine gute Reinigungsleistung an Fett-verschmutzten harten Oberflächen, wie beispielsweise Geschirr, auf.

Nichtionische Tenside im Rahmen der Erfindung sind Alkoxylate aber auch Alkylphenolpolyglykolether, endgruppenverschlossene Polyglykolether, Mischether und Hydroxymischether und Fettsäurepolyglykolester. Ebenfalls geeignet sind Blockpolymere aus Ethylenoxid und Propylenoxid sowie Fettsäurealkanolamide und Fettsäurepolyglykolether. Wichtige Klassen erfindungsgemäßer nichtionischer Tenside sind weiterhin die Aminoxide und die Zuckertenside, insbesondere die Alkylpolyglucoside.

Zu den erfindungsgemäß geeigneten Aminoxiden gehören Alkylaminoxide, insbesondere Alkyldimethylaminoxide, Alkylamidoaminoxide und Alkoxyalkylaminoxide. Bevorzugte Aminoxide genügen Formel IX,

R⁶R⁷R⁸N⁺-O⁻ (IX)

R⁶-[CO-NH-(CH₂)_{w}]_{z}-N⁺(R⁷)(R⁸)-O⁻ (IX)

in der R⁶ ein gesättiger oder ungesättigter C₆₋₂₂-Alkylrest, vorzugsweise C₈₋₁₈-Alkylrest, insbesondere ein gesättigter C₁₀₋₁₆-Alkylrest, beispielsweise ein gesättigter C₁₂₋₁₄-Alkylrest, der in den Alkylamidoaminoxiden über eine Carbonylamidoalkylengruppe -CO-NH-(CH₂)_{z}- und in den Alkoxyalkylaminoxiden über eine Oxaalkylengruppe-O-(CH₂)_{z}- an das Stickstoffatom N gebunden ist, wobei z jeweils für eine Zahl von 1 bis 10, vorzugsweise 2 bis 5, insbesondere 3,
R⁷, R⁸ unabhängig voneinander ein C₁₋₄-Alkylrest, ggf. hydroxysubstituiert wie z.B. ein Hydroxyethylrest, insbesondere ein Methylrest, ist.

Der Gehalt an Aminoxid beträgt in dem Reinigungsmittel bevorzugt 1 bis 15 Gew.-% und vorzugsweise 2 bis 10 Gew.-%, jeweils bezogen auf das gesamte Reinigungsmittel.

Zuckertenside sind bekannte oberflächenaktive Verbindungen, zu denen beispielsweise die Zuckertensidklassen der Alkylglucoseester, Aldobionamide, Gluconamide (Zuckersäureamide), Glycerinamide, Glyceringlykolipide, Polyhydroxyfettsäureamidzuckertenside (Zuckeramide) und Alkylpolyglykoside zählen. Im Rahmen der erfindungsgemäßen Lehre bevorzugte Zuckertenside sind die Alkylpolyglykoside und die Zuckeramide sowie deren Derivate, insbesondere ihre Ether und Ester. Bei den Ethern handelt es sich um die Produkte der Reaktion einer oder mehrerer, vorzugsweise einer, Zuckerhydroxygruppe mit einer eine oder mehrere Hydroxygruppen enthaltenden Verbindung, beispielsweise C₁₋₂₂-Alkoholen oder Glykolen wie Ethylen- und/oder Propylenglykol, wobei die Zuckerhydroxygruppe auch Polyethylenglykol- und/oder Polypropylenglykolreste tragen kann. Die Ester sind die Reaktionsprodukte einer oder mehrerer, vorzugsweise einer, Zuckerhydroxygruppe mit einer Carbonsäure, insbesondere einer C₆₋₂₂-Fettsäure.

Besonders bevorzugte Zuckeramide genügen der Formel R'C(O)N(R")[Z], in der R' für einen linearen oder verzweigten, gesättigten oder ungesättigten Acylrest, vorzugsweise einen linearen ungesättigten Acylrest, mit 5 bis 21, vorzugsweise 5 bis 17, insbesondere 7 bis 15, besonders bevorzugt 7 bis 13 Kohlenstoffatomen, R" für einen linearen oder verzweigten, gesättigten oder ungesättigten Alkyl-rest, vorzugsweise einen linearen ungesättigten Alkylrest, mit 6 bis 22, vorzugsweise 6 bis 18, insbesondere 8 bis 16, besonders bevorzugt 8 bis 14 Kohlenstoffatomen, einen C₁₋₅-Alkylrest, insbesondere einen Methyl-, Ethyl-, Propyl-, Isopropyl-, n-Butyl-, Isobutyl-, tert-Butyl- oder n-Pentylrest, oder Wasserstoff und Z für einen Zuckerrest, d.h. einen Monosaccharidrest, stehen. Besonders bevorzugte Zuckeramide sind die Amide der Glucose, die Glucamide, beispielsweise Lauroyl-methylglucamid.

Die Alkylpolyglykoside (APG) sind im Rahmen der erfindungsgemäßen Lehre besonders bevorzugte Zuckertenside. Sie stellen bekannte Stoffe dar, die nach den einschlägigen Verfahren der präparativen organischen Chemie erhalten werden können. Sie genügen vorzugsweise der allgemeinen Formel RⁱO(AO)ₐ[G]ₓ, in der Rⁱ für einen linearen oder verzweigten, gesättigten oder ungesättigten Alkylrest mit 6 bis 22, vorzugsweise 6 bis 18, insbesondere 8 bis 16, besonders bevorzugt 8 bis 14 Kohlenstoffatomen, [G] für einen glykosidisch verknüpften Zuckerrest vorzugsweise Xylose, insbesondere aber Glucose, sowie AO für eine Alkylenoxygruppe, z.B. eine Ethylenoxy- oder Propylenoxygruppe, und a für den mittleren Alkoxylierungsgrad von 0 bis 20 stehen. Hierbei kann die Gruppe (AO)ₐ auch verschiedene Alkylenoxyeinheiten enthalten, z.B. Ethylenoxy- oder Propylenoxyeinheiten, wobei es sich dann bei a um den mittleren Gesamtalkoxylierungsgrad, d.h. die Summe aus Ethoxylierungs- und Propoxylierungsgrad, handelt. Die Indexzahl x gibt den Oligomerisierungsgrad (DP-Grad) an, d.h. die Verteilung von Mono- und Oligoglykosiden, und steht für eine Zahl zwischen 1 und 10. Während x in einer gegebenen Verbindung stets ganzzahlig sein muss und hier vor allem die Werte x = 1 bis 6 annehmen kann, ist der Wert x für ein bestimmtes Alkylglykosid eine analytisch ermittelte rechnerische Größe, die meistens eine gebrochene Zahl darstellt. Vorzugsweise werden Alkylglykoside mit einem mittleren Oligomerisierungsgrad x von 1,1 bis 3,0 eingesetzt. Aus anwendungstechnischer Sicht sind solche Alkylglykoside bevorzugt, deren Oligomerisierungsgrad kleiner als 1,7 ist und insbesondere zwischen 1,2 und 1,6 liegt. Soweit nachfolgend nicht näher bzw. anders ausgeführt, handelt es sich bei den Alkylresten Rⁱ der APG um lineare ungesättigte Reste mit der angegebenen Zahl an Kohlenstoffatomen.

Der Alkyl- bzw. Alkenylrest Rⁱ kann sich von primären Alkoholen mit 8 bis 18, vorzugsweise 8 bis 14 Kohlenstoffatomen ableiten. Typische Beispiele sind Capronalkohol, Caprylalkohol, Caprinalkohol und Undecylalkohol sowie deren technische Gemische, wie sie beispielsweise im Verlauf der Hydrierung von technischen Fettsäuremethylestern oder im Verlauf der Hydrierung von Aldehyden aus der Roelenschen Oxosynthese anfallen.

Vorzugsweise leitet sich der Alkyl- bzw. Alkenylrest Rⁱ aber von Laurylalkohol, Myristylalkohol, Cetylalkohol, Palmoleylalkohol, Stearylalkohol, Isostearylalkohol oder Oleylalkohol ab. Weiterhin sind Elaidylalkohol, Petroselinylalkohol, Arachidylalkohol, Gadoleylalkohol, Behenylalkohol, Erucylalkohol sowie deren technische Gemische zu nennen.

Besonders bevorzugte APG sind nicht alkoxyliert (a = 0) und genügen Formel RO[G]ₓ, in der R wie zuvor für einen linearen oder verzweigten, gesättigten oder ungesättigten Alkylrest mit 4 bis 22 Kohlenstoffatomen, [G] für einen glykosidisch verknüpften Zuckerrest, vorzugsweise Glucoserest, und x für eine Zahl von 1 bis 10, bevorzugt 1,1 bis 3, insbesondere 1,2 bis 1,6, stehen. Dementsprechend bevorzugte Alkylpolyglykoside sind beispielsweise C₈₋₁₀- und ein C₁₂₋₁₄-Alkylpolyglucosid mit einem DP-Grad von 1,4 oder 1,5, insbesondere C₈₋₁₀- Alkyl-1,5-glucosid und C₁₂₋₁₄-Alkyl-1,4-glucosid.

Das erfindungsgemäße Mittel kann zusätzlich ein oder mehrere kationische Tenside (Kationtenside; INCI Quaternary Ammonium Compounds) enthalten, üblicherweise in einer Menge von 0,001 bis 5 Gew.-%, vorzugsweise 0,01 bis 4 Gew.-%, insbesondere 0,1 bis 3 Gew.-%, besonders bevorzugt 0,2 bis 2 Gew.-%, äußerst bevorzugt 0,5 bis 1,5 Gew.-%, beispielsweise 1 Gew.-%.

Bevorzugte kationische Tenside sind die quaternären oberflächenaktiven Verbindungen, insbesondere mit einer Ammonium-, Sulfonium-, Phosphonium-, Jodonium- oder Arsoniumgruppe, die auch als antimikrobielle Wirkstoffe bekannt sind. Durch den Einsatz von quaternären oberflächenaktiven Verbindungen mit antimikrobieller Wirkung kann das Mittel mit einer antimikrobiellen Wirkung ausgestaltet werden bzw. dessen gegebenenfalls aufgrund anderer Inhaltsstoffe bereits vorhandene antimikrobielle Wirkung verbessert werden.

Besonders bevorzugte kationische Tenside sind die quaternären Ammoniumverbindungen (QAV; INCI Quaternary Ammonium Compounds) gemäß der allgemeinen Formel (R^{I})(R^{II})(R^{II})(R^{IV})N⁺ X⁻, in der R^{I} bis R^{IV} gleiche oder verschiedene C₁₋₂₂-Alkylreste, C₇₋₂₈-Aralkylreste oder heterozyklische Reste, wobei zwei oder im Falle einer aromatischen Einbindung wie im Pyridin sogar drei Reste gemeinsam mit dem Stickstoffatom den Heterozyklus, z.B. eine Pyridinium- oder Imidazoliniumverbindung, bilden, darstellen und X⁻ Halogenidionen, Sulfationen, Hydroxidionen oder ähnliche Anionen sind. Für eine optimale antimikrobielle Wirkung weist vorzugsweise wenigstens einer der Reste eine Kettenlänge von 8 bis 18, insbesondere 12 bis 16, C-Atomen auf.

QAV sind durch Umsetzung tertiärer Amine mit Alkylierungsmitteln, wie z.B. Methylchlorid, Benzylchlorid, Dimethylsulfat, Dodecylbromid, aber auch Ethylenoxid herstellbar. Die Alkylierung von tertiären Aminen mit einem langen Alkyl-Rest und zwei Methyl-Gruppen gelingt besonders leicht, auch die Quaternierung von tertiären Aminen mit zwei langen Resten und einer Methyl-Gruppe kann mit Hilfe von Methylchlorid unter milden Bedingungen durchgeführt werden. Amine, die über drei lange Alkyl-Reste oder Hydroxy-substituierte Alkyl-Reste verfügen, sind wenig reaktiv und werden bevorzugt mit Dimethylsulfat quaterniert.

Zur Vermeidung möglicher Inkompatibilitäten der kationischen Tenside mit den erfindungsgemäß enthaltenen anionischen Tensiden werden möglichst aniontensidverträgliches und/oder möglichst wenig kationisches Tensid eingesetzt oder in einer besonderen Ausführungsform der Erfindung gänzlich auf kationische Tenside verzichtet.

Ein erfindungsgemäßes Mittel, insbesondere Wasch- oder Reinigungsmittel, kann mindestens einen wasserlöslichen und/oder wasserunlöslichen, organischen und/oder anorganischen Builder (Gerüststoffe) enthalten.

Zu den generell einsetzbaren Gerüststoffen zählen insbesondere die Aminocarbonsäuren und deren Salze, Zeolithe, Silikate, Carbonate und organische (Co)Builder. Vorzugsweise sind die Mittel phosphatfrei.

Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Glutamindiessigsäure, Nitrilotriessigsäure und Ethylendiamintetraessigsäure sowie Polyasparaginsäure, polymere Hydroxyverbindungen wie Dextrin sowie polymere (Poly-)carbonsäuren, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Organische Buildersubstanzen können, falls gewünscht, in Mengen bis zu 40 Gew.-%, insbesondere bis zu 25 Gew.-% und vorzugsweise von 1 Gew.-% bis 8 Gew.-% enthalten sein.

Als wasserlösliche anorganische Buildermaterialien kommen insbesondere Alkalisilikate in Betracht. Als wasserunlösliche, wasserdispergierbare anorganische Buildermaterialien können insbesondere kristalline oder amorphe Alkalialumosilikate, falls gewünscht, in Mengen von bis zu 50 Gew.-%, vorzugsweise nicht über 40 Gew.-% und in flüssigen Mitteln insbesondere von 1 Gew.-% bis 5 Gew.-%, eingesetzt werden. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl beta- als auch delta-Natriumdisilikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5 werden in einer weiteren bevorzugten Ausführungsform erfindungsgemäßer Mittel eingesetzt. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Anorganische Buildersubstanzen sind, falls gewünscht, in den erfindungsgemäßen Zusammensetzungen vorzugsweise in Mengen bis zu 60 Gew.-%, insbesondere von 1 Gew.-% bis 10 Gew.-%, enthalten.

Erfindungsgemäße Wasch- oder Reinigungsmittel können neben der Amylase weitere Enzyme enthalten. Dies können hydrolytische Enzyme oder andere Enzyme in einer für die Wirksamkeit des Mittels zweckmäßigen Konzentration sein. Eine Ausführungsform der Erfindung stellen somit Mittel dar, die eines oder mehrere Enzyme umfassen. Als Enzyme bevorzugt einsetzbar sind alle Enzyme, die in dem erfindungsgemäßen Mittel eine katalytische Aktivität entfalten können, insbesondere eine Protease, von der Amylase gemäß SEQ ID NO:1 unterscheidbare Amylasen, eine Cellulase, Hemicellulase, Mannanase, Tannase, Xylanase, Xanthanase, Xyloglucanase, β-Glucosidase, Pektinase, Carrageenase, Perhydrolase, Oxidase, Oxidoreduktase oder eine Lipase, sowie deren Gemische. Das zusätzliche Enzym ist, wie oben beschrieben, bevorzugt eine Protease. Enzyme sind in dem Mittel vorteilhafterweise jeweils in einer Menge von 1 x 10⁻⁸ bis 5 Gew.-%bezogen auf aktives Protein enthalten. Zunehmend bevorzugt ist jedes Enzym in einer Menge von 1 x 10⁻⁷-3 Gew.-%, von 0,00001-1 Gew.-%, von 0,00005-0,5 Gew.-%, von 0,0001 bis 0,1 Gew.-% und besonders bevorzugt von 0,0001 bis 0,05 Gew.-% in erfindungsgemäßen Mitteln enthalten, bezogen auf aktives Protein. Besonders bevorzugt zeigen die Enzyme synergistische Reinigungsleistungen gegenüber bestimmten Anschmutzungen oder Flecken, d.h. die in der Mittelzusammensetzung enthaltenen Enzyme unterstützen sich in ihrer Reinigungsleistung gegenseitig. Synergistische Effekte können nicht nur zwischen verschiedenen Enzymen, sondern auch zwischen einem oder mehreren Enzymen und weiteren Inhaltsstoffen des erfindungsgemäßen Mittels auftreten.

Bei der/den weiteren Amylase(n) handelt es sich vorzugsweise um eine α-Amylase. Bei der Hemicellulase handelt es sich vorzugsweise um eine β-Glucanase, eine Pektinase, eine Pullulanase und/oder eine Mannanase. Bei der Cellulase handelt es sich vorzugsweise um ein Cellulase-Gemisch oder eine Einkomponenten-Cellulase, vorzugsweise bzw. überwiegend um eine Endoglucanase und/oder eine Cellobiohydrolase. Bei der Oxidoreduktase handelt es sich vorzugsweise um eine Oxidase, insbesondere eine Cholin-Oxidase, oder um eine Perhydrolase.

Die eingesetzten Proteasen sind vorzugsweise alkalische Serin-Proteasen. Sie wirken als unspezifische Endopeptidasen, das heißt, sie hydrolysieren beliebige Säureamidbindungen, die im Inneren von Peptiden oder Proteinen liegen und bewirken dadurch den Abbau proteinhaltiger Anschmutzungen auf dem Reinigungsgut. Ihr pH-Optimum liegt meist im deutlich alkalischen Bereich.

Die Proteinkonzentration kann mit Hilfe bekannter Methoden, zum Beispiel dem BCA-Verfahren (Bicinchoninsäure; 2,2'-Bichinolyl-4,4'-dicarbonsäure) oder dem Biuret-Verfahren bestimmt werden. Die Bestimmung der Aktivproteinkonzentration erfolgt diesbezüglich über eine Titration der aktiven Zentren unter Verwendung eines geeigneten irreversiblen Inhibitors (für Proteasen beispielsweise Phenylmethylsulfonylfluorid (PMSF)) und Bestimmung der Restaktivität (vgl. M. Bender et al., J. Am. Chem. Soc. 88, 24 (1966), S. 5890-5913).

In den hierin beschriebenen Mitteln können die einzusetzenden Enzyme ferner zusammen mit Begleitstoffen, etwa aus der Fermentation, konfektioniert sein. In flüssigen Formulierungen werden die Enzyme bevorzugt als Enzymflüssigformulierung(en) eingesetzt.

Die Enzyme werden in der Regel nicht in Form des reinen Proteins, sondern vielmehr in Form stabilisierter, lager- und transportfähiger Zubereitungen bereitgestellt. Zu diesen vorkonfektionierten Zubereitungen zählen beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren oder weiteren Hilfsmitteln versetzt.

Alternativ können die Enzyme sowohl für die feste als auch für die flüssige Darreichungsform verkapselt werden, beispielsweise durch Sprühtrocknung oder Extrusion der Enzymlösung zusammen mit einem vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin ist es möglich, zwei oder mehrere Enzyme zusammen zu konfektionieren, so dass ein einzelnes Granulat mehrere Enzymaktivitäten aufweist.

In verschiedenen Ausführungsformen kann das erfindungsgemäße Mittel einen oder mehrere Enzymstabilisatoren aufweisen. Daher kann das erfindungsgemäße Mittel ferner einen Enzymstabilisator beispielsweise ausgewählt aus der Gruppe bestehend aus Natriumformiat, Natriumsulfat, niederen aliphatischen Alkoholen und Borsäure sowie deren Estern und Salzen enthalten. Natürlich können auch zwei oder mehr dieser Verbindungen in Kombination eingesetzt werden. Die Salze der genannten Verbindungen können auch in Form von Hydraten, wie beispielsweise Natriumsulfat Dekahydrat, eingesetzt werden.

Der Begriff "niedere aliphatische Alkohole", wie hierin verwendet, schließt Monoalkohole, Diole und höherwertige Alkohole mit bis zu 6 Kohlenstoffatomen ein. Als zu der Gruppe der niederen aliphatischen Alkohole gehörend seien in diesem Zusammenhang insbesondere Polyole, beispielsweise Glycerin, (Mono)Ethylenglykol, (Mono)Propylenglykol oder Sorbit genannt, ohne dass die Erfindung auf diese beschränkt ist.

Neben dem mindestens einen Enzymstabilisator, ausgewählt aus der obenstehenden Gruppe, kann ein erfindungsgemäßes Mittel auch mindestens einen weiteren Stabilisator enthalten. Derartige Stabilisatoren sind im Stand der Technik bekannt.

Reversible Proteaseinhibitoren schützen die in einem Wasch- oder Reinigungsmittel enthaltenen Enzyme vor proteolytischem Abbau, indem die enzymatische Tätigkeit der in dem Mittel enthaltenen Proteasen reversibel inhibiert wird. Als reversible Proteaseinhibitoren werden häufig Benzamidin-Hydrochlorid, Boronsäuren oder deren Salze oder Ester eingesetzt, darunter vor allem Derivate mit aromatischen Gruppen, etwa ortho-, meta- oder para-substituierte Phenylboronsäuren, insbesondere 4-Formylphenyl-Boronsäure, beziehungsweise die Salze oder Ester der genannten Verbindungen. Auch Peptidaldehyde, das heißt Oligopeptide mit reduziertem C-Terminus, insbesondere solche aus 2 bis 50 Monomeren werden zu diesem Zweck eingesetzt. Zu den peptidischen reversiblen Proteaseinhibitoren gehören unter anderem Ovomucoid und Leupeptin.

Weitere Enzymstabilisatoren sind Aminoalkohole wie Mono-, Di-, Triethanol- und -Propanolamin und deren Mischungen, aliphatische Carbonsäuren bis zu C₁₂, wie beispielsweise Bernsteinsäure, andere Dicarbonsäuren oder Salze der genannten Säuren. Auch endgruppenverschlossene Fettsäureamidalkoxylate sind für diesen Zweck geeignet. Auch manche als Builder eingesetzte organische Säuren vermögen zusätzlich ein Enzym zu stabilisieren. Auch Calcium- und/oder Magnesiumsalze werden zu diesem Zwecke eingesetzt, wie beispielsweise Calciumacetat.

Polyamid-Oligomere oder polymere Verbindungen wie Lignin, wasserlösliche Vinyl-Copolymere oder Cellulose-Ether, Acryl-Polymere und/oder Polyamide stabilisieren die Enzym-Präparation unter anderem gegenüber physikalischen Einflüssen oder pH-Wert-Schwankungen. Polyamin-N-Oxid-enthaltende Polymere wirken gleichzeitig als Enzymstabilisatoren und als Farbübertragungsinhibitoren. Andere polymere Stabilisatoren sind lineare C₈-C₁₈ Polyoxyalkylene. Auch Alkylpolyglycoside können die enzymatischen Komponenten des erfindungsgemäßen Mittels stabilisieren und vermögen vorzugsweise, diese zusätzlich in ihrer Leistung zu steigern. Vernetzte N-haltige Verbindungen erfüllen vorzugsweise eine Doppelfunktion als Soil-release-Agentien und als Enzym-Stabilisatoren. Hydrophobes, nichtionisches Polymer stabilisiert insbesondere eine gegebenenfalls enthaltene Cellulase.

Reduktionsmittel und Antioxidantien erhöhen die Stabilität der Enzyme gegenüber oxidativem Zerfall; hierfür sind beispielsweise schwefelhaltige Reduktionsmittel geläufig, etwa Natrium-Sulfit und reduzierende Zucker.

In einer Ausführungsform sind die Mittel gemäß der vorliegenden Erfindung flüssig und enthalten Wasser als Hauptlösungsmittel, d.h. es handelt sich um wässrige Mittel. Der Wassergehalt des erfindungsgemäßen wässrigen Mittels beträgt üblicherweise 15 bis 70 Gew.-%, vorzugsweise 20 bis 60 Gew.-%. In verschiedenen Ausführungsformen beträgt der Wassergehalt mehr als 5 Gew.-%, bevorzugt mehr als 15 Gew.-% und insbesondere bevorzugt mehr als 50 Gew.-%, jeweils bezogen auf die Gesamtmenge an Mittel.

Daneben können dem Mittel nichtwässrige Lösungsmittel zugesetzt werden. Geeignete nichtwässrige Lösungsmittel umfassen ein- oder mehrwertige Alkohole, Alkanolamine oder Glykolether, sofern sie im angegebenen Konzentrationsbereich mit Wasser mischbar sind. Vorzugsweise werden die Lösungsmittel ausgewählt aus Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropylenglykolmonoethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether sowie Mischungen dieser Lösungsmittel.

Das eine oder die mehreren nichtwässrigen Lösungsmittel ist/sind üblicherweise in einer Menge von 0,1 bis 10 Gew.-%, vorzugsweise 1 bis 8 Gew.-% bezogen auf die Gesamtzusammensetzung enthalten.

Neben den bisher genannten Komponenten können die erfindungsgemäßen Mittel weitere Inhaltsstoffe enthalten, die die anwendungstechnischen und/oder ästhetischen Eigenschaften des Reinigungsmittels weiter verbessern. Hierzu zählen beispielsweise Additive zur Verbesserung des Ablauf-und Trocknungsverhaltens, zur Einstellung der Viskosität und/oder zur Stabilisierung, sowie weitere in Reinigungsmitteln übliche Hilfs- und Zusatzstoffe, etwa UV-Stabilisatoren, Parfüm, Perlglanzmittel, Farbstoffe, Korrosionsinhibitoren, Konservierungsmittel, Bitterstoffe, organische Salze, Desinfektionsmittel, strukturgebende Polymere, Entschäumer, verkapselte Inhaltsstoffe (z.B. verkapseltes Parfum), pH-Stellmittel sowie Hautgefühl-verbessernde oder pflegende Additive.

Polymere Verdickungsmittel im Sinne der vorliegenden Erfindung sind die als Polyelektrolyte verdickend wirkenden Polycarboxylate, vorzugsweise Homo- und Copolymerisate der Acrylsäure, insbesondere Acrylsäure-Copolymere wie Acrylsäure-Methacrylsäure-Copolymere, und die Polysaccharide, insbesondere Heteropolysaccharide, sowie andere übliche verdickende Polymere.

Geeignete Polysaccharide bzw. Heteropolysaccharide sind die Polysaccharidgummen, beispielsweise Gummi arabicum, Agar, Alginate, Carrageene und ihre Salze, Guar, Guaran, Tragacant, Gellan, Ramsan, Dextran oder Xanthan und ihre Derivate, z.B. propoxyliertes Guar, sowie ihre Mischungen. Andere Polysaccharidverdicker, wie Stärken oder Cellulosederivate, können alternativ, vorzugsweise aber zusätzlich zu einem Polysaccharidgummi eingesetzt werden, beispielsweise Stärken verschiedensten Ursprungs und Stärkederivate, z.B. Hydroxyethylstärke, Stärkephosphatester oder Stärkeacetate, oder Carboxymethylcellulose bzw. ihr Natriumsalz, Methyl-, Ethyl-, Hydroxyethyl-, Hydroxypropyl-, Hydroxypropyl-methyl- oder Hydroxyethyl-methyl-cellulose oder Celluloseacetat.

Als polymere Verdickungsmittel geeignete Acrylsäure-Polymere sind beispielsweise hochmolekulare mit einem Polyalkenylpolyether, insbesondere einem Allylether von Saccharose, Pentaerythrit oder Propylen, vernetzte Homopolymere der Acrylsäure (INCI Carbomer), die auch als Carboxyvinylpolymere bezeichnet werden.

Besonders geeignete polymere Verdickungsmittel sind aber folgende Acrylsäure-Copolymere: (i) Copolymere von zwei oder mehr Monomeren aus der Gruppe der Acrylsäure, Methacrylsäure und ihrer einfachen, vorzugsweise mit C₁₋₄-Alkanolen gebildeten, Ester (INCI Acrylates Copolymer), zu denen etwa die Copolymere von Methacrylsäure, Butylacrylat und Methylmethacrylat (CAS 25035-69-2) oder von Butylacrylat und Methylmethacrylat (CAS 25852-37-3) gehören; (ii) vernetzte hochmolekulare Acrylsäurecopolymere, zu denen etwa die mit einem Allylether der Saccharose oder des Pentaerythrits vernetzten Copolymere von C₁₀₋₃₀-Alkylacrylaten mit einem oder mehreren Monomeren aus der Gruppe der Acrylsäure, Methacrylsäure und ihrer einfachen, vorzugsweise mit C₁₋₄-Alkanolen gebildeten, Ester (INCI Acrylates/C10-30 Alkyl Acrylate Crosspolymer) gehören.

Der Gehalt an polymerem Verdickungsmittel beträgt üblicherweise nicht mehr als 8 Gew.-%, vorzugsweise zwischen 0,1 und 7 Gew.-%, besonders bevorzugt zwischen 0,5 und 6 Gew.-%, insbesondere zwischen 1 und 5 Gew.-% und äußerst bevorzugt zwischen 1,5 und 4 Gew.-%, beispielsweise zwischen 2 und 2,5 Gew.-%, bezogen auf das Gesamtgewicht des Reinigungsmittels.

Zur Stabilisierung des erfindungsgemäßen Mittels, insbesondere bei hohem Tensidgehalt, können ein oder mehrere Dicarbonsäuren und/oder deren Salze zugesetzt werden, insbesondere eine Zusammensetzung aus Na-Salzen der Adipin-, Bernstein- und Glutarsäure, wie sie z.B. unter dem Handelsnamen Sokalan^{®} DSC erhältlich ist. Der Einsatz erfolgt hierbei vorteilhafterweise in Mengen von 0,1 bis 8 Gew.-%, vorzugsweise 0,5 bis 7 Gew.-%, insbesondere 1,3 bis 6 Gew.-% und besonders bevorzugt 2 bis 4 Gew.-%, bezogen auf das Gesamtgewicht des Reinigungsmittels.

Kann jedoch auf deren Einsatz verzichtet werden, so ist das erfindungsgemäße Mittel vorzugsweise frei von Dicarbonsäure(salze)n.

Die erfindungsgemäßen Waschmittel können mit Referenzwaschmitteln verglichen werden, um die erhöhte Waschleistung der erfindungsgemäßen Mittel festzustellen. Ein solches Waschsystem kann wie folgt zusammengesetzt sein (alle Angaben in Gewichts-Prozent): Referenzmittel: 4-7 Gew.-% LAS, 5-9 Gew.-% anionische Tenside, 2-4 Gew.-% C12-C18 Fettsäure-Na-Salze, 4-7 Gew.-% nicht-ionische Tenside, 0,1-1 Gew.-% Phosphonate, 1-4 Gew.-% Citronensäure, 1-3 Gew.-% NaOH, 1-3 Gew.-% Entschäumer,1-3 Gew.-% Glycerin, 0,05-1 Gew.-% Konservierungsagenz, 0,5-2 Gew.-% Ethanol und Rest Wasser (demin.). Erfindungsgemäßes Mittel: 4-7 Gew.-% LAS, 5-9 Gew.-% anionische Tenside, 2-4 Gew.-% C12-C18 Fettsäure-Na-Salze, 4-7 Gew.-% nicht-ionische Tenside, 0,1-1 Gew.-% Phosphonate, 1-4 Gew.-% Citronensäure, 1-3 Gew.-% NaOH, 1-3 Gew.-% Entschäumer,1-3 Gew.-% Glycerin, 0,05-1 Gew.-% Konservierungsagenz, 0,5-2 Gew.-% Ethanol, 0,001-1 Gew.-% Amylase (SEQ ID NO:1) und Rest Wasser (demin.). Bevorzugt beträgt die Dosierung des festen Waschmittels zwischen 45 und 85 Gramm pro Waschflotte, beispielsweise 50, 65 oder 70 Gramm pro Waschflotte. Bevorzugt wird gewaschen in einem pH-Wertebereich zwischen pH 7,5 und pH 9,5, bevorzugt zwischen pH 8 und pH 9.

Die zuvor genannten Ausführungsformen der vorliegenden Erfindung umfassen alle festen, pulverförmigen, flüssigen, gelförmigen oder pastösen Darreichungsformen erfindungsgemäßer Mittel, die gegebenenfalls auch aus mehreren Phasen bestehen können sowie in komprimierter oder nicht komprimierter Form vorliegen können. Das Mittel kann als rieselfähiges Pulver vorliegen, insbesondere mit einem Schüttgewicht von 300 g/l bis 1200 g/l, insbesondere 500 g/l bis 900 g/l oder 600 g/l bis 850 g/l. Zu den festen Darreichungsformen des Mittels zählen ferner Extrudate, Granulate, Tabletten oder Pouches. Alternativ kann das Mittel auch flüssig, gelförmig oder pastös sein, beispielsweise in Form eines nicht-wässrigen Flüssigwaschmittels oder einer nicht-wässrigen Paste oder in Form eines wässrigen Flüssigwaschmittels oder einer wasserhaltigen Paste. Weiterhin kann das Mittel als Einkomponentensystem vorliegen. Solche Mittel bestehen aus einer Phase. Alternativ kann ein Mittel auch aus mehreren Phasen bestehen. Ein solches Mittel ist demnach in mehrere Komponenten aufgeteilt.

Ein weiterer Erfindungsgegenstand ist ein Waschverfahren umfassend die Verfahrensschritte a) Bereitstellen einer Wasch- oder Reinigungslösung umfassend ein erfindungsgemäßes Mittel, und b) In-Kontakt-Bringen eines Textils oder einer harten Oberfläche mit der Wasch- oder Reinigungslösung gemäß (a).

In verschieden Ausführungsformen zeichnet sich das oben beschriebene Verfahren dadurch aus, dass das erfindungsgemäße Mittel bei einer Temperatur von 0-100°C, bevorzugt 0-80°C, weiter bevorzugt 20-55°C und am meisten bevorzugt bei 25-45°C eingesetzt wird.

Hierunter fallen sowohl manuelle als auch maschinelle Verfahren, wobei maschinelle Verfahren bevorzugt sind. Verfahren zur Reinigung von Textilien zeichnen sich im Allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einem Waschmittel oder einer Lösung oder Verdünnung dieses Mittels behandelt wird. Alle denkbaren Wasch- oder Reinigungsverfahren können in wenigstens einem der Verfahrensschritte um die Anwendung eines erfindungsgemäßen Wasch- oder Reinigungsmittels bereichert werden und stellen dann Ausführungsformen der vorliegenden Erfindung dar. Alle Sachverhalte, Gegenstände und Ausführungsformen, die für erfindungsgemäße Mittel beschrieben sind, sind auch auf diesen Erfindungsgegenstand anwendbar. Daher wird an dieser Stelle ausdrücklich auf die Offenbarung an entsprechender Stelle verwiesen mit dem Hinweis, dass diese Offenbarung auch für die vorstehenden erfindungsgemäßen Verfahren gilt.

Ein dritter Erfindungsgegenstand ist die Verwendung des erfindungsgemäßen Mittels zur Entfernung von Stärke-haltigen Anschmutzungen.

Alle Sachverhalte, Gegenstände und Ausführungsformen, die für erfindungsgemäßen Mittel und die Amylase beschrieben sind, sind auch auf die weiteren Erfindungsgegenstände anwendbar. Daher wird an dieser Stelle ausdrücklich auf die Offenbarung an entsprechender Stelle verwiesen mit dem Hinweis, dass diese Offenbarung auch für das vorstehende erfindungsgemäße Verfahren und die erfindungsgemäßen Verwendungen gilt.

### Beispiele

### Beispiel 1: Stabilitätstest

**Verwendete Handgeschirrspülmatrix (Tabelle 1)**

| **Handels- oder chemischer Name** | **% AM (Rohmaterial)** | **% aktives Material in der Formel** |
|---|---|---|
| LABS | 96 | 10-14 |
| Natronlauge | 50 | 2-5 |
| Galaxy SLES | 70 | 6-8 |
| Galaxy CAPB Plus | 37 | 1-4 |
| Parmetol A 28 S | 100 | 0-1 |
| Parfüm 04-8862 | 100 | 0-1 |
| Tartrazin Yellow 85 E 102 | 1 | 0-1 |
| Kaliumacetat | 70 | 0-1 |
| Ethanol | 100 | 1-4 |
| Wasser demin. | 100 | Rest |

**Verwendete Waschmittelmatrix (Tabelle 2)**

| **Handels- oder chemischer Name** | **% AM (Rohmaterial)** | **% aktives Material in der Formel** |
|---|---|---|
| Wasser demin. | 100 | Rest |
| Alkylbenzolsulfonsäure | 96 | 4-7 |
| Anionische Tenside | 70 | 5-9 |
| C12-C18 Fettsäuren-Natrium-Salz | 30 | 2-4 |
| Nicht-ionische Tenside | 100 | 4-7 |
| Phosphonat | 40 | 0,1-1 |
| Citronensäure | 100 | 1-4 |
| NaOH | 50 | 1-3 |
| Antischaum | t.q. | 0,01-1 |
| Glycerin | 100 | 1-3 |
| Konservierungsmittel | 100 | 0,05-1 |
| Ethanol | 93 | 0,5-2 |

| | | |
|---|---|---|
| Ohne opt. Aufheller, Parfüm, Farbstoff und Enzyme; Dosierung: 4,7 g/L | | |

### Aktivitätsbestimmung der Amylase

Die enzymhaltige Lösung wird unter standardisierten Bedingungen mit löslicher Stärke inkubiert. Es entstehen Dextrine, die endständig Glucosereste mit reduzierenden Gruppen enthalten. Diese bilden mit p-Hydroxybenzoesäurehydrazid (PAHBAH) einen stabilen, gelben Farbkomplex. Die Detektion erfolgt im Durchfluss bei 410 nm.

Die Methode dient der Bestimmung der Amylaseaktivität in Rohstoffen und Fertigprodukten mit einem Continuous Flow System im Konzentrationsbereich von 30 bis 450 CAE/Liter.

### Lagerstabilität der Amylase

Zur Bestimmung der Lagerstabilität der erfindungsgemäßen Amylase wurden jeweils 0,1% der erfindungsgemäßen Amylase und 0,1% der Referenzamylase in die in Tabelle 1 und 2 aufgeführten Matrices einformuliert.

Anschließend wurden die Ansätze bei 30°C und 40°C in Klimaschränken für 2, 4 und 8 Wochen gelagert. Nach den entsprechenden Lagerzeiträumen wurde eine Probe entnommen und mithilfe der oben beschriebenen Aktivitätsmessung auf ihre Amylase-Restaktivität hin geprüft.

### Ergebnisse der Lagerversuche in verschiedenen Matrices

**Lagerstabilität nach Lagerung in Handgeschirrspülmatrix (Tabelle 3)**

| | | 0,1% Referenzamylase | 0,1% erfindungsgemäße Amylase (SEQ ID NO:1) |
|---|---|---|---|
| Anfangswert | | 100% | 100% |
| 30°C | 2 Wochen | 74% | 73% |
| | 4 Wochen | 61% | 65% |
| 40°C | 2 Wochen | 45% | 62% |
| | 4 Wochen | 26% | 56% |

**Lagerstabilität nach Lagerung in Waschmittelmatrix (Tabelle 4)**

| | | 0,1% Referenzamylase | 0,1% erfindungsgemäße Amylase (SEQ ID NO:1) |
|---|---|---|---|
| Anfangswert | | 100% | 100% |
| 30°C | 8 Wochen | 83% | 89% |
| 40°C | 8 Wochen | 51% | 79% |

Wie aus den Daten aus Tabelle 3 und 4 hervorgeht, zeigt die erfindungsgemäße Amylase sowohl in Handgeschirrspülmitteln als auch in Waschmitteln eine deutlich erhöhte Lagerstabilität. Diese verbesserte Lagerstabilität konnte sowohl nach einer Lagerung bei 30°C als auch bei 40°C ermittelt werden.

## Patentansprüche

1. Mittel, bevorzugt Wasch- oder Reinigungsmittel, besonders bevorzugt Flüssigwasch- oder Flüssigreinigungsmittel, **dadurch gekennzeichnet, dass** es mindestens eine Amylase enthält, die eine Aminosäuresequenz umfasst, die über ihre Gesamtlänge mindestens 98% Sequenzidentität mit der in SEQ ID NO:1 angegebenen Aminosäuresequenz aufweist, wobei das Mittel bezogen auf das Gesamtgewicht 0,0001 bis 1 Gew.-%, vorzugsweise 0,006 bis 0,6 Gew.-% der Amylase enthält und wobei folgende Mittel ausgenommen sind, wenn sie die Amylase in einer Konzentration von 0,2 mg/l Aktivproteingehalt oder 0,05 mg/l Aktivproteingehalt enthalten:
| Compound | Content of compound (% w/w) | % active component (% w/w) |
|---|---|---|
| LAS (linear alkylbenzene sulfonates) | 5,15 | 5,00 |
| AS (alkylbenzene sulfonates) | 5,00 | 4,50 |
| AEOS (alkyl ethoxy sulfate) | 14,18 | 10,00 |
| Coco fatty acid | 1,00 | 1,00 |
| AEO (alkyl ethoxylate) | 5,00 | 5,00 |
| MEA (monoethanolamine) | 0,30 | 0,30 |
| MPG (monopropylene glycol) | 3,00 | 3,00 |
| Ethanol | 1,50 | 1,35 |
| DTPA (as Na5 salt) pentasodium diethylenetriaminepentaacetic acid | 0,25 | 0,10 |
| Sodium citrate | 4,00 | 4,00 |
| Sodium formate | 1,00 | 1,00 |
| Sodium hydroxide | 0,66 | 0,66 |
| H2O, ion exchanged | 58,95 | 58,95 |
und
| Compound | Content of compound (% w/w) | % active component (% w/w) |
|---|---|---|
| LAS (linear alkylbenzene sulfonates) | 12,00 | 11,60 |
| AEOS (alkyl ethoxy sulfate), SLES (sodium lauryl ether sulfate) | 17,63 | 4,90 |
| Soy fatty acid | 2,75 | 2,48 |
| Coco fatty acid | 2,75 | 2,80 |
| Sodium hydroxide | 1,75 | 1,80 |
| Ethanol / Propan-2-ol | 3,00 | 2,70/0,30 |
| MPG (monopropylene glycol) | 6,00 | 6,00 |
| Glycerol | 1,71 | 1,70 |
| TEA (triethanolamine) | 3,33 | 3,30 |
| Sodium formate | 1,00 | 1,00 |
| Sodium citrate | 2,00 | 2,00 |
| DTMPA (diethylenetriaminepentaacetic acid) | 0,48 | 0,20 |
| PCA (polycarboxylic acid type polymer) | 0,46 | 0,18 |
| Phenoxy ethanol | 0,50 | 0,50 |
| H2O, ion exchanged | 33,64 | 33,64 |

2. Das Mittel, bevorzugt Wasch- oder Reinigungsmittel, besonders bevorzugt Flüssigwasch- oder Flüssigreinigungsmittel nach Anspruch 1, **dadurch gekennzeichnet, dass**
(a) die Amylase aus einer Amylase nach Anspruch 1 als Ausgangsmolekül durch ein- oder mehrfache konservative Aminosäuresubstitution erhältlich ist; und/oder
(b) die Amylase aus einer Amylase nach Anspruch 1 als Ausgangsmolekül erhältlich ist durch Fragmentierung, Deletions-, Insertions- oder Substitutionsmutagenese und eine Aminosäuresequenz umfasst, die über eine Länge von mindestens 370, 380, 390, 400, 410, 420, 430, 440, 450, 460, 470, 480 oder 482 zusammenhängenden Aminosäuren mit dem Ausgangsmolekül übereinstimmt.

3. Das Mittel, bevorzugt Wasch- oder Reinigungsmittel, besonders bevorzugt Flüssigwasch- oder Flüssigreinigungsmittel, nach einem der Ansprüche 1 bis 2, **dadurch gekennzeichnet, dass** die die Amylase eine Aminosäuresequenz umfasst, die zu der in SEQ ID NO:1 angegeben Aminosäuresequenz über deren Gesamtlänge zu mindestens 98,5%, 98,8%, 99,0%, 99,2%, 99,4%, 99,6%, 99,8% oder zu 100,0% identisch ist.

4. Das Mittel, bevorzugt Wasch- oder Reinigungsmittel, besonders bevorzugt Flüssigwasch- oder Flüssigreinigungsmittel, nach einem der Ansprüche 1 bis 3, **dadurch gekennzeichnet, dass** das Mittel ferner mindestens einen weiteren Bestandteil ausgewählt aus der Gruppe bestehend aus Tensiden, weiteren Enzymen, Enzymstabilisatoren, Komplexbildnern für Schwermetalle, Geüststoffen, Bleichmitteln, Buildern, Elektrolyten, nichtwässrigen Lösungsmitteln, pH-Stellmitteln, Geruchsabsorbern, desodorierenden Substanzen, Parfümen, Parfümträgern, Fluoreszenzmitteln, Farbstoffen, Hydrotropen, Schauminhibitoren, Silikonölen, Antiredepositionsmitteln, Vergrauungsinhibitoren, Einlaufverhinderern, weiteren Knitterschutzmitteln, Farbübertragungsinhibitoren, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- und Imprägniermitteln, Quell- und Schiebefestmitteln, weichmachenden Komponenten sowie UV-Absorbern enthält.

5. Das Mittel, bevorzugt Wasch- oder Reinigungsmittel, besonders bevorzugt Flüssigwasch- oder Flüssigreinigungsmittel, nach Anspruch 4, **dadurch gekennzeichnet, dass** das Mittel mindestens ein Tensid enthält, wobei das mindestens eine Tensid vorzugsweise ausgewählt wird aus linearen Alkylbenzolsulfonaten, Alkylethersulfaten, Alkylsulfonaten, Alkylsulfaten, Monoglyceridsulfaten, Estersulfonaten (Sulfofettsäureester), Ligninsulfonaten, Fettsäurecyanamiden, anionischen Sulfobernsteinsäuretensiden, Fettsäureisethionaten, Acylaminoalkansulfonaten (Fettsäuretauriden), Fettsäuresarcosinaten, Ethercarbonsäuren, Alkyl(ether)phosphaten, Alkylamidoalkylaminen, alkylsubstituierten Aminosäuren, acylierten Aminosäuren, Betainen, Fettalkoholalkoxylaten, Alkylphenolpolyglykolethern, endgruppenverschlossenen Polyglykolethern, Mischethern und Hydroxymischethern, Fettsäurepolyglykolestern, Fettsäurealkanolamiden, Fettsäurepolyglykolethern, Aminoxiden, Alkylpolyglucosiden und Kombinationen der vorgenannten.

6. Das Mittel, bevorzugt Wasch- oder Reinigungsmittel, besonders bevorzugt Flüssigwasch- oder Flüssigreinigungsmittel, nach Anspruch 5, **dadurch gekennzeichnet, dass** das Mittel mindestens ein Tensid enthält, wobei das mindestens eine Tensid ausgewählt wird aus linearen Alkylbenzolsulfonaten, Alkylethersulfaten, Betainen, Fettalkoholalkoxylaten, Aminoxiden, Alkylpolyglucosiden und Kombinationen der vorgenannten, insbesondere aus linearen Alkylbenzolsulfonaten und Aminoxiden.

7. Das Mittel, bevorzugt Wasch- oder Reinigungsmittel, besonders bevorzugt Flüssigwasch- oder Flüssigreinigungsmittel, nach einem der Ansprüche 1 bis 6, **dadurch gekennzeichnet, dass** das Mittel ein Flüssigtextilwaschmittel oder Geschirrspülmittel, insbesondere Handgeschirrspülmittel ist.

8. Verwendung eines Mittels nach einem der Ansprüche 1-7 zur Entfernung von Stärke-haltigen Anschmutzungen.

9. Wasch- oder Reinigungsverfahren umfassend die Verfahrensschritte
a) Bereitstellen einer Wasch- oder Reinigungslösung umfassend ein Mittel gemäß einem der Ansprüche 1 bis 8, und
b) In-Kontakt-Bringen eines Textils oder einer harten Oberfläche mit der Wasch- oder Reinigungslösung gemäß (a).

## Claims

1. Agent, preferably washing or cleaning agent, particularly preferably liquid washing or liquid cleaning agent, **characterized in that** it contains at least one amylase which comprises an amino acid sequence which over its entire length has at least 98% sequence identity with the amino acid sequence given in SEQ ID NO:1, wherein the composition contains 0.0001 to 1% by weight, preferably 0.006 to 0.6% by weight, of the amylase based on the total weight and wherein the following compositions are excluded if they contain the amylase in a concentration of 0.2 mg/l active protein content or 0.05 mg/l active protein content:
| Compound | Content of compound (% w/w) | % active component (% w/w) |
|---|---|---|
| LAS (linear alkylbenzene sulfonates) | 5,15 | 5,00 |
| AS (alkylbenzene sulfonates) | 5,00 | 4,50 |
| AEOS (alkyl ethoxy sulfate) | 14,18 | 10,00 |
| Coco fatty acid | 1,00 | 1,00 |
| AEO (alkyl ethoxylate) | 5,00 | 5,00 |
| MEA (monoethanolamine) | 0,30 | 0,30 |
| MPG (monopropylene glycol) | 3,00 | 3,00 |
| Ethanol | 1,50 | 1,35 |
| DTPA (as Na5 salt) pentasodium diethylenetriaminepentaacetic acid | 0,25 | 0,10 |
| Sodium citrate | 4,00 | 4,00 |
| Sodium formats | 1,00 | 1,00 |
| Sodium hydroxide | 0,66 | 0,66 |
| H2O, ion exchanged | 58,95 | 58,95 |
and
| Compound | Content of compound (% w/w) | % active component (% w/w) |
|---|---|---|
| LAS (linear alkylbenzene sulfonates) | 12,00 | 11,60 |
| AEOS (alkyl ethoxy sulfate), SLES (sodium lauryl ether sulfate) | 17,63 | 4,90 |
| Soy fatty acid | 2,75 | 2,48 |
| Coco fatty acid | 2,75 | 2,80 |
| Sodium hydroxide | 1,75 | 1,80 |
| Ethanol / propan-2-ol | 3,00 | 2,70/0,30 |
| MPG (monopropylene glycol) | 6,00 | 6,00 |
| Glycerol | 1,71 | 1,70 |
| TEA (triethanolamine) | 3,33 | 3,30 |
| Sodium formats | 1,00 | 1,00 |
| Sodium citrate | 2,00 | 2,00 |
| DTMPA (diethylenetriaminepentaacetic acid) | 0,48 | 0,20 |
| PCA (polycarboxylic acid type polymer) | 0,46 | 0,18 |
| Phenoxy ethanol | 0,50 | 0,50 |
| H2O, ion exchanged | 33,64 | 33,64 |

2. The agent, preferably washing or cleaning agent, particularly preferably liquid washing or liquid cleaning agent according to claim 1, **characterized in that**
(a) the amylase is obtainable from an amylase according to claim 1 as starting molecule by single or multiple conservative amino acid substitution; and/or
(b) the amylase is obtainable from an amylase according to claim 1 as starting molecule by fragmentation, deletion, insertion or substitution mutagenesis and comprises an amino acid sequence which corresponds to the starting molecule over a length of at least 370, 380, 390, 400, 410, 420, 430, 440, 450, 460, 470, 480 or 482 contiguous amino acids.

3. The agent, preferably a detergent or cleaning composition, particularly preferably a liquid detergent or liquid cleaning composition, according to one of claims 1 to 2, **characterized in that** the amylase comprises an amino acid sequence which is at least 98.5%, 98.8%, 99.0%, 99.2%, 99.4%, 99.6%, 99.8% or 100.0% identical to the amino acid sequence given in SEQ ID NO:1 over its entire length.

4. The agent, preferably washing or cleaning agent, particularly preferably liquid washing or liquid cleaning agent, according to one of claims 1 to 3, **characterized in that** the agent further comprises at least one further constituent selected from the group consisting of surfactants, other enzymes, enzyme stabilizers, complexing agents for heavy metals, builders, bleaching agents, builders, electrolytes, non-aqueous solvents, pH adjusters, odour absorbers, deodorizing substances, fragrances, fragrance carriers, fluorescent agents, dyes, hydrotropes, foam inhibitors, silicone oils, antideposition agents, greying inhibitors, shrinkage inhibitors, other crease inhibitors, color transfer inhibitors, antimicrobial agents, germicides, fungicides, antioxidants, preservatives, corrosion inhibitors, antistatic agents, bittering agents, ironing aids, phobizing and impregnating agents, swelling and lubricating agents, softeners and UV absorbers.

5. The agent, preferably washing or cleaning agent, particularly preferably liquid washing or liquid cleaning agent, according to claim 4, **characterized in that** the agent contains at least one surfactant, wherein the at least one surfactant is preferably selected from linear alkyl benzene sulphonates, alkyl ether sulphates, alkyl sulphonates, alkyl sulphates, monoglyceride sulphates, ester sulphonates (sulphofatty acid esters), lignin sulphonates, fatty acid cyanamides, anionic sulphosuccinic acid surfactants, fatty acid isethionates, acylaminoalkanesulfonates (fatty acid taurides), fatty acid arcosinates, ether carboxylic acids, alkyl(ether) phosphates, alkylamidoal-kylamines, alkyl-substituted amino acids, acylated amino acids, betaines, fatty alcohol alkoxylates, alkylphenol polyglycol ethers, end-capped polyglycol ethers, mixed ethers and hydroxy mixed ethers, fatty acid polyglycol esters, fatty acid alkanolamides, fatty acid polyglycol ethers, amine oxides, alkyl polyglucosides and combinations of the foregoing.

6. The agent, preferably washing or cleaning agent, particularly preferably liquid washing or liquid cleaning agent, according to claim 5, **characterized in that** the agent contains at least one surfactant, the at least one surfactant being selected from linear alkyl benzene sulphonates, alkyl ether sulphates, betaines, fatty alcohol alkoxylates, amine oxides, alkyl polyglucosides and combinations of the aforementioned, in particular linear alkyl benzene sulphonates and amine oxides.

7. The agent, preferably washing or cleaning agent, particularly preferably liquid washing or liquid cleaning agent, according to one of claims 1 to 6, **characterized in that** the agent is a liquid textile washing agent or dishwashing agent, in particular hand dishwashing agent.

8. Use of an agent according to any one of claims 1-7 for removing starch-containing soiling.

9. Washing or cleaning process comprising the process steps
a) Providing a washing or cleaning solution comprising an agent according to any one of claims 1 to 8, and
b) Bringing a textile or hard surface into contact with the washing or cleaning solution according to (a).

## Revendications

1. Agent, de préférence agent de lavage ou de nettoyage, de manière particulièrement préférée agent de lavage ou de nettoyage liquide, **caractérisé en ce qu'**il contient au moins une amylase qui comprend une séquence d'acides aminés qui présente sur sa longueur totale au moins 98 % d'identité de séquence avec la séquence d'acides aminés indiquée dans SEQ ID NO:1, l'agent contenant, par rapport au poids total, de 0,0001 à 1 % en poids d'amylase.%, de préférence de 0,006 à 0,6 % en poids de l'amylase et les agents suivants étant exclus lorsqu'ils contiennent l'amylase à une concentration de 0,2 mg/l de teneur en protéines actives ou de 0,05 mg/l de teneur en protéines actives:
| Composé | Content of compound (% w/w) | % active component (% w/w) |
|---|---|---|
| LAS (alkylbenzène sulfonates linéaires) | 5,15 | 5,00 |
| AS (alkylbenzène sulfonates) | 5,00 | 4,50 |
| AEOS (alkyl ethoxy sulfate) | 14,18 | 10,00 |
| Acide gras de coco | 1,00 | 1,00 |
| AEO (éthoxylates d'alkyle) | 5,00 | 5,00 |
| MEA (monoéthanolamine) | 0,30 | 0,30 |
| MPG (monopropylène glycol) | 3,00 | 3,00 |
| Éthanol | 1,50 | 1,35 |
| DTPA (sous forme de sel de Na5) acide pentasodium dié-thylèneetriaminepentaa-cétique | 0,25 | 0,10 |
| citrate de sodium | 4,00 | 4,00 |
| Formats de sodium | 1,00 | 1,00 |
| hydroxyde de sodium | 0,66 | 0,66 |
| H2O, échange d'ions | 58,95 | 58,95 |
et
| Composé | Content of compound (% w/w) | % active component (% w/w) |
|---|---|---|
| LAS (alkylbenzène sulfonates linéaires) | 12,00 | 11,60 |
| AEOS (alkyl ethoxy sulfate), SLES (sodium lauryl ether sulfate) | 17,63 | 4,90 |
| Acide gras de soja | 2,75 | 2,48 |
| Acide gras de coco | 2,75 | 2,80 |
| hydroxyde de sodium | 1,75 | 1,80 |
| Éthanol / propan-2-ol | 3,00 | 2,70/0,30 |
| MPG (monopropylène glycol) | 6,00 | 6,00 |
| Glycérol | 1,71 | 1,70 |
| TEA (triéthanolamine) | 3,33 | 3,30 |
| Formats de sodium | 1,00 | 1,00 |
| citrate de sodium | 2,00 | 2,00 |
| DTMPA (acide diéthylèneétri-aminepentaacétique) | 0,48 | 0,20 |
| PCA (polymère de type acide polycarboxylique) | 0,46 | 0,18 |
| phénoxy éthanol | 0,50 | 0,50 |
| H2O, échange d'ions | 33,64 | 33,64 |

2. L'agent, de préférence un produit de lavage ou de nettoyage, de manière particulièrement préférée un produit de lavage ou de nettoyage liquide selon la revendication 1, **caractérisé en ce que**
(a) l'amylase peut être obtenue à partir d'une amylase selon la revendication 1 comme molécule de départ par une ou plusieurs substitutions conservatives d'acides aminés ; et/ou
(b) l'amylase peut être obtenue à partir d'une amylase selon la revendication 1 comme molécule de départ par fragmentation, mutagénèse par délétion, insertion ou substitution et comprend une séquence d'acides aminés qui correspond à la molécule de départ sur une longueur d'au moins 370, 380, 390, 400, 410, 420, 430, 440, 450, 460, 470, 480 ou 482 acides aminés contigus.

3. L'agent, de préférence un agent de lavage ou de nettoyage, de manière particulièrement préférée un agent de lavage ou de nettoyage liquide, selon l'une des revendications 1 à 2, **caractérisé en ce que** l'amylase comprend une séquence d'acides aminés qui est identique à la séquence d'acides aminés indiquée dans SEQ ID NO:1 sur sa longueur totale à raison d'au moins 98,5%, 98,8%, 99,0%, 99,2%, 99,4%, 99,6%, 99,8% ou 100,0%.

4. L'agent, de préférence un produit de lavage ou de nettoyage, de manière particulièrement préférée un produit de lavage ou de nettoyage liquide, selon l'une des revendications 1 à 3, **caractérisé en ce que** l'agent contient en outre au moins un autre composant choisi dans le groupe constitué par les tensioactifs, d'autres enzymes, des stabilisateurs d'enzymes, des complexants pour les métaux lourds, des adjuvants, des agents de blanchiment, des adjuvants, des électrolytes, des solvants non aqueux, des régulateurs de pH, des absorbeurs d'odeur, des substances désodorisantes, parfums, supports de parfum, agents fluorescents, colorants, hydrotropes, inhibiteurs de mousse, huiles de silicone, agents anti-redéposition, inhibiteurs de gri-saillement, inhibiteurs de rétrécissement, autres agents anti-froissement, inhibiteurs de transfert de couleur, agents antimicrobiens, des germicides, des fongicides, des antioxydants, des conservateurs, des inhibiteurs de corrosion, des antistatiques, des agents d'amertume, des auxiliaires de repassage, des agents de phobage et d'imprégnation, des agents de gonflement et de glissement, des composants adoucissants ainsi que des absorbeurs d'UV.

5. L'agent, de préférence un produit de lavage ou de nettoyage, de manière particulièrement préférée un produit de lavage liquide ou de nettoyage liquide, selon la revendication 4, **caractérisé en ce que** l'agent contient au moins un agent tensioactif, ledit au moins un agent tensioactif étant de préférence choisi parmi les alkylbenzènesulfonates linéaires, les alkyléthersulfates, les alkylsulfonates, les alkylsulfates, les monoglycéridesulfates, les estersulfonates (esters d'acides gras sulfurés), les ligninesulfonates, les cyanamides d'acides gras, les tensioactifs anioniques sulfosucciniques, iséthionates d'acides gras, acylaminoalcanesulfonates (taurides d'acides gras), sarcosinates d'acides gras, acides éther-carboxyliques, alkyl(éther)phosphates, alkylami-doalkylamines, acides aminés alkyl-substitués, acides aminés acylés, bétaïnes, alcoxylates d'alcools gras, éthers polyglycoliques d'alkylphénols, éthers polyglycoliques à groupes terminaux fermés, éthers mixtes et éthers mixtes hydroxylés, esters polyglycoliques d'acides gras, alcanolamides d'acides gras, éthers polyglycoliques d'acides gras, oxydes d'amines, alkylpolyglucosides et combinaisons des précédents.

6. L'agent, de préférence un produit de lavage ou de nettoyage, de manière particulièrement préférée un produit de lavage liquide ou de nettoyage liquide, selon la revendication 5, **caractérisé en ce que** l'agent contient au moins un tensioactif, le au moins un tensioactif étant choisi parmi les alkylbenzènesulfonates linéaires, les alkyléthersulfates, les béta nes, les alcoxylates d'alcools gras, les oxydes d'amine, les alkylpolyglucosides et les combinaisons des précédents, en particulier les alkylbenzènesulfonates linéaires et les oxydes d'amine.

7. L'agent, de préférence un produit de lavage ou de nettoyage, de manière particulièrement préférée un produit de lavage ou de nettoyage liquide, selon l'une des revendications 1 à 6, **caractérisé en ce que** le produit est un produit de lavage textile liquide ou un produit de lavage de la vaisselle, en particulier un produit de lavage de la vaisselle à la main.

8. Utilisation d'un agent selon l'une quelconque des revendications 1 à 7 pour éliminer des salissures contenant de l'amidon.

9. Procédé de lavage ou de nettoyage comprenant les étapes de procédé suivantes
a) fournir une solution de lavage ou de nettoyage comprenant un agent selon l'une quelconque des revendications 1 à 8, et
b) Mise en contact d'un textile ou d'une surface dure avec la solution de lavage ou de nettoyage selon (a).
